# EUROPEAN PATENT APPLICATION

(11) **EP 4 545 480 A1**
(43) Date of publication of application: **30.04.2025**
(21) Application number: 23827163.9
(22) Date of filing: 19.06.2023
(51) Int. Cl.: C01B 32/174, H01M 4/139, H01M 4/62

(54) **CARBON NANOTUBE DISPERSED LIQUID, ELECTRODE MIXTURE SLURRY, ELECTRODE FILM, AND SECONDARY BATTERY**

(30) Priority: 21.06.2022 JP 2022099875
(71) Applicant: artience Co., Ltd., Chuo-ku Tokyo 104-0031 (JP); TOYOCOLOR CO., LTD., Tokyo 104-8381 (JP)
(72) Inventor: FUKAGAWA, Soichiro, Tokyo 104-8381 (JP); MORITA,Yu, Tokyo 104-8381 (JP); HIRABAYASHI, Honami, Tokyo 104-8381 (JP)
(74) Representative: SSM Sandmair
(86) International application number: PCT/JP2023/022619
(87) International publication number: WO 2023/248980

(57) **Abstract**

Provided is a carbon nanotube dispersed liquid which contains carbon nanotubes, a dispersant, and a solvent, and in which, in a volume-based particle size distribution curve measured by a laser diffraction/scattering-type particle size distribution measuring method, particle size distribution peaks are present in a particle size range of 0.1-3 µm and in a particle size range of 10-100 µm, and the cumulative particle size D₅₀ is 4 µm or more.

## Description

### Technical Field

The embodiments of the present invention relate to a carbon nanotube dispersed liquid, an electrode mixture slurry, an electrode film, and a secondary battery.

### Related Art

Lithium ion secondary batteries are widely used as batteries for electric vehicles, portable devices, and the like. As the performance of electric vehicles, portable devices, and the like improves, there is an increasing demand every year for lithium ion secondary batteries with higher capacity, higher output, and smaller size and lighter weight.

Since the capacity of a lithium ion secondary battery depends greatly on the positive electrode active material and the negative electrode active material that are the main materials, various materials for use as these electrode active materials have been actively researched. However, the charge capacities of the electrode active materials in practical use have all reached close to the theoretical values, and improvement is close to the limit. Since the charge capacity can be increased simply by increasing the amount of electrode active material filled in the electrode film, attempts have been made to reduce the amounts of conductive material and binder resin added, which do not directly contribute to the charge capacity.

The conductive material plays a role in forming conductive paths within the electrode film and connecting particles of the electrode active material, and it is required that the conductive paths and connection between particles are not easily broken due to the expansion and contraction of the electrode film. In order to maintain the conductive paths and connection between particles with a small amount of addition, it is effective to use nanocarbon, particularly carbon nanotubes (CNT), which has a large specific surface area, as the conductive material, to form an efficient conductive network. However, nanocarbon, which has a large specific surface area, has a strong cohesive force, and therefore there has been a problem that it is difficult to properly disperse nanocarbon in the electrode mixture slurry and/or the electrode film.

In light of this background, methods have been proposed to prepare a conductive material dispersed liquid using various dispersants and produce an electrode mixture slurry via the conductive material dispersed liquid, or to devise the physical properties of the carbon nanotubes (see Patent Documents 1 to 3).

Patent Documents 1 to 3 propose the preparation of an electrode for a lithium ion battery in which multiple conductive materials are used in combination to suppress aggregation of the conductive materials during dispersion and drying, and the amounts of the conductive materials and binder resin added are reduced. In addition, as the outer diameter of the carbon nanotubes decreases, generally the specific surface area increases, so the wettability to the solvent deteriorates, making it difficult to obtain a good dispersed liquid with a high concentration. Nevertheless, carbon nanotubes having a smaller outer diameter and a larger specific surface area can ideally form an efficient conductive network. Therefore, there is an urgent need for a dispersed liquid in which carbon nanotubes having a small outer diameter and a large specific surface area are properly dispersed while retaining the electrical conductivity unique to carbon nanotubes, more specifically, by utilizing the fiber length without breakage.

### Citation List

### Patent Documents

[Patent Document 1] Japanese Patent Application Laid-Open No. 2008-044820
[Patent Document 2] Japanese Patent Application Laid-Open No. 2010-238575
[Patent Document 3] Japanese Patent Application Laid-Open No. 2016-025077

### SUMMARY OF INVENTION

### Technical Problem

However, the carbon nanotubes in the dispersed liquids obtained in Patent Documents 1 to 3 have short fiber lengths, and it is not possible to sufficiently disperse the carbon nanotubes stably while maintaining the electrical conductivity. Furthermore, by using multiple carbon nanotubes in combination, the structural viscosity of the carbon nanotubes increases, which may cause thickening or gelation over time.

Therefore, the present invention provides a carbon nanotube dispersed liquid that is highly conductive and has good stability over time, and provides a secondary battery that has excellent rate characteristics and cycle characteristics with an electrode mixture slurry and an electrode film using the carbon nanotube dispersed liquid.

### Solution to Problem

After extensive research, the inventors have found that by forming a carbon nanotube dispersed liquid that includes a solvent, a dispersant, and carbon nanotubes and has specific particle size distribution characteristics, excellent stability over time is achieved without impairing the electrical conductivity even when the carbon nanotube dispersed liquid includes multiple carbon nanotubes, and the carbon nanotube dispersed liquid maintains a good dispersion state when used for preparing an electrode mixture slurry and for producing an electrode film, making it possible to form a good conductive network in the electrode.

That is, the present invention includes the following embodiments.
[1] A carbon nanotube dispersed liquid, including carbon nanotubes, a dispersant, and a solvent, in which in a volume-based particle size distribution curve measured by a laser diffraction/scattering-type particle size distribution measuring method, particle size distribution peaks are present in a range where a particle size is 0.1 µm or more and 3 µm or less and in a range where the particle size is 10 µm or more and 100 µm or less, and
   a cumulative particle size D₅₀ is 4 µm or more.
[2] The carbon nanotube dispersed liquid of [1], having at least two fiber diameter distributions in a range where a fiber diameter is 0.1 nm or more and 20 nm or less in a fiber diameter distribution of the carbon nanotubes measured by a transmission electron microscope.
[3] The carbon nanotube dispersed liquid of [2], having a first fiber diameter distribution in a range of 0.5 nm or more and less than 3 nm, and a second fiber diameter distribution in a range of 3 nm or more and 10 nm or less.
[4] The carbon nanotube dispersed liquid described in any one of [1] to [3], in which the dispersant includes fluorine-based resin.
[5] The carbon nanotube dispersed liquid described in any one of [1] to [4], in which a mass ratio of the fluorine-based resin to the carbon nanotubes is 0.1 to 10.
[6] The carbon nanotube dispersed liquid described in any one of [1] to [5], in which the solvent is substantially free of water and has a pH of 8 or more and 12 or less.
[7] An electrode mixture slurry, including the carbon nanotube dispersed liquid described in any one of [1] to [6], and an electrode active material.
[8] An electrode film, including a coating film of the carbon nanotube dispersed liquid described in any one of [1] to [6] or the electrode mixture slurry described in [7].
[9] A secondary battery, including a positive electrode, a negative electrode, and an electrolyte, the secondary battery using the electrode film described in [8] in at least one of the positive electrode and the negative electrode.

### Effects of Invention

According to the embodiments of the present invention, it is possible to provide a carbon nanotube dispersed liquid that is highly conductive and has good stability over time, and provide a secondary battery that has excellent rate characteristics and cycle characteristics with an electrode mixture slurry and an electrode film using the carbon nanotube dispersed liquid.

### BRIEF DESCRIPTION OF DRAWINGS

[FIG. 1] FIG. 1 is a graph showing the particle size distribution of the carbon nanotube dispersed liquid in Example 1 at a laser light transmittance of 60% in a laser diffraction/scattering-type particle size distribution measuring method.
[FIG. 2] FIG. 2 is a graph showing a distribution diagram of fiber diameters of the carbon nanotube dispersed liquid in Example 1, measured by a transmission electron microscope.

### DESCRIPTION OF EMBODIMENTS

Hereinafter, carbon nanotubes, a carbon nanotube dispersed liquid, an electrode mixture slurry, an electrode film, a secondary battery, etc., which are embodiments of the present invention, will be described in detail. The present invention is not limited to the following embodiments, and also includes embodiments that are implemented within the scope not departing from the spirit of the present invention. The numerical values specified in this specification are values determined by the methods disclosed in the embodiments or examples.

In this specification, the term "conductive material" may be used to include conductive materials such as carbon nanotubes and carbon black. In this specification, the fiber diameter of the carbon nanotubes may be referred to as "outer diameter." Additionally, in this specification, the coating film and the coated film may be referred to as "electrode film."

In this specification, a numerical range indicated using "to" indicates a range that includes the numerical values before and after "to" as the minimum value and the maximum value, respectively. In the numerical ranges described in stages in this specification, the upper limit or lower limit of the numerical range of a certain stage can be arbitrarily combined with the upper limit or lower limit of the numerical range of another stage.

Unless otherwise noted, various components appearing in this specification may be used independently as a single type, or as a mixture of two or more types.

### <Carbon nanotube dispersed liquid>

The carbon nanotube dispersed liquid of some embodiments includes carbon nanotubes, a dispersant, and a solvent. In addition, in a volume-based particle size distribution curve measured by a laser diffraction/scattering-type particle size distribution measuring method, particle size distribution peaks are present in a range where the particle size is 0.1 µm or more and 3 µm or less and in a range where the particle size is 10 µm or more and 100 µm or less, and the cumulative particle size D₅₀ is 4 µm or more.

### <Carbon nanotube>

The carbon nanotubes are formed by rolling up planar graphite into a cylindrical shape, and include single-walled carbon nanotubes or multi-walled carbon nanotubes, or may include a mixture of these. Single-walled carbon nanotubes have a structure in which one layer of graphite is rolled up. Multi-walled carbon nanotubes have a structure in which two, three, or more layers of graphite are rolled up. Further, the sidewalls of the carbon nanotubes may not have a graphite structure. In addition, for example, carbon nanotubes having sidewalls with an amorphous structure are also referred to as carbon nanotubes in this specification.

The shape of the carbon nanotubes is not limited. The shape may be various shapes including a needle shape, a cylindrical tubular shape, a fishbone shape (fishbone or cup stack type), a trump shape (platelet), a coil shape, etc. Among these, the shape of the carbon nanotubes in this embodiment is preferably a needle shape or a cylindrical tubular shape. The carbon nanotubes may be of a single shape or a combination of two or more shapes.

The form of the carbon nanotubes includes, for example, graphite whiskers, filamentous carbon, graphite fibers, ultrafine carbon tubes, carbon tubes, carbon fibrils, carbon microtubes, carbon nanofibers, etc. The carbon nanotubes may have a single form of these or a combination of two or more of these forms.

In some embodiments, the carbon nanotube dispersed liquid preferably uses at least two types of carbon nanotubes having different average fiber diameters, and specifically can include at least first carbon nanotubes and second carbon nanotubes.

The average fiber diameter of the first carbon nanotubes is preferably 0.1 nm or more, more preferably 0.5 nm or more, and even more preferably 1 nm or more. Further, the average fiber diameter is preferably less than 5 nm, and more preferably less than 3 nm. For example, the average fiber diameter of the first carbon nanotubes may be 0.1 nm or more and less than 5 nm, 0.5 nm or more and less than 3 nm, or 1 nm or more and less than 3 nm. The average fiber diameter of the second carbon nanotubes is preferably 3 nm or more, and more preferably 5 nm or more. Further, the average fiber diameter is preferably 20 nm or less, and more preferably 10 nm or less. For example, the average fiber diameter of the second carbon nanotubes may be 3 nm or more and 20 nm or less, or 5 nm or more and 10 nm or less. The average fiber diameter of the carbon nanotubes can be calculated by observing the form of the carbon nanotubes using a transmission electron microscope, measuring the length of the minor axis, and obtaining the average value of 300 carbon nanotubes.

Specifically, the average fiber diameter of the carbon nanotubes can be calculated, for example, by forming a film using a diluted solution of the carbon nanotubes, directly observing the film at a magnification of 50,000 times using a transmission electron microscope (H-7650, produced by Hitachi, Ltd.), measuring the fiber diameters of 300 randomly selected carbon nanotubes, and averaging the measured fiber diameters.

The first carbon nanotubes are preferably single-walled carbon nanotubes, and the second carbon nanotubes are preferably multi-walled carbon nanotubes. The single-walled carbon nanotubes have a structure in which one layer of graphite is rolled up, and the multi-walled carbon nanotubes have a structure in which two, three, or more layers of graphite are rolled up.

Since the first carbon nanotube is a carbon material with strong cohesive force and poor dispersibility, and has high linearity, the first carbon nanotubes contribute to conduction between active materials that are relatively far apart in the electrode layer, but the probability of contact with the active materials is considered to be relatively low. On the other hand, since the second carbon nanotube is a carbon material with weak cohesive force and good dispersibility, and has low linearity, the second carbon nanotubes contribute to conduction between active materials that are relatively close to each other, and the probability of contact with the active materials is considered to be relatively high.

The mass ratio of the first carbon nanotubes to the second carbon nanotubes is 1:10 to 20:1, preferably 1:9 to 10:1, and more preferably 1:5 to 5:1. Within the above range, it is possible to obtain a carbon nanotube dispersed liquid that can form an electrode layer with good dispersibility, excellent conduction between active materials, a high probability of contact with the active materials, and excellent peel strength (adhesion).

The carbon purity of the carbon nanotubes is expressed as the content (% by mass) of carbon atoms in the carbon nanotubes. The carbon purity is preferably 80% by mass, more preferably 90% by mass or more, even more preferably 95% by mass or more, and particularly preferably 98% by mass or more, relative to 100% by mass of the carbon nanotubes. By setting the carbon purity within the above range, problems such as short circuits caused by the formation of dendrites due to impurities can be prevented.

The carbon purity of the carbon nanotubes can be adjusted by purification treatment. Various conventionally known methods can be used to purify the carbon nanotubes, which include, for example, acid treatment, graphitization treatment, and chlorination treatment.

The acid used when performing acid treatment on the carbon nanotubes may be any acid capable of dissolving the metal and metal oxide contained in the carbon nanotubes. For example, inorganic acids and carboxylic acids are preferred, and among inorganic acids, hydrochloric acid, sulfuric acid, and nitric acid are particularly preferred. The acid treatment of the carbon nanotubes is preferably performed in a liquid phase, and the carbon nanotubes are more preferably dispersed and/or mixed in a liquid phase. After the acid treatment, the carbon nanotubes are preferably washed with water and dried.

The graphitization treatment of the carbon nanotubes is not particularly limited, but can be performed by heating the carbon nanotubes at 1500°C to 3500°C in an inert atmosphere with an oxygen concentration of 0.1% or less.

The chlorination treatment of the carbon nanotubes is not particularly limited, but can be performed, for example, by introducing chlorine gas in an inert atmosphere with an oxygen concentration of 0.1% or less and heating the carbon nanotubes at 800°C to 2000°C.

The carbon nanotubes may be modified on the surfaces or ends with functional groups or alkyl groups, and may be doped with alkali metal or halogen. For example, the carbon nanotubes may be functionalized with carboxyl groups, sulfo groups, or hydroxyl groups by heating in acid.

As the conductive material, carbon materials such as carbon black and graphite may be used alone or in combination of two or more types. Among these conductive materials, carbon black is preferred from the viewpoint of the adsorption performance of the dispersant. The carbon black includes, for example, acetylene black, furnace black, hollow carbon black, channel black, thermal black, ketjen black, etc. Further, the carbon black may be neutral, acidic, or basic, and oxidation-treated carbon black and graphitization-treated carbon black may also be used.

### <Dispersant>

The dispersant in this embodiment is not particularly limited as long as the dispersant can stably disperse the carbon nanotubes, and surfactants and resin-type dispersants can be used. The surfactants are mainly classified as anionic, cationic, nonionic, and amphoteric. Depending on the characteristics required for dispersing the carbon nanotubes, a suitable type of dispersant can be used in a suitable blending amount.

In a case of selecting an anionic surfactant, the type is not particularly limited. Specifically, the anionic surfactant includes, for example, fatty acid salts, polysulfonates, polycarboxylates, alkyl sulfates, alkylaryl sulfonates, alkylnaphthalenesulfonates, dialkylsulfonates, dialkylsulfosuccinates, alkyl phosphates, polyoxyethylene alkyl ether sulfates, polyoxyethylene alkylaryl ether sulfates, naphthalenesulfonic acid formalin condensates, polyoxyethylene alkyl phosphate sulfonates, glycerol borate fatty acid esters, and polyoxyethylene glycerol fatty acid esters, but not limited to these. Further, specific examples include sodium dodecylbenzenesulfonates, sodium lauric acid sulfates, sodium polyoxyethylene lauryl ether sulfates, polyoxyethylene nonylphenyl ether sulfates, and sodium salts of β-naphthalenesulfonic acid formalin condensates, but not limited to these.

In addition, a cationic surfactant includes alkylamine salts and quaternary ammonium salts. Specific examples include stearylamine acetates, trimethylcoconutriammonium chlorides, trimethyltallowammonium chlorides, dimethyldioleylammonium chlorides, methyloleyldiethanol chlorides, tetramethylammonium chlorides, laurylpyridinium chlorides, laurylpyridinium bromides, laurylpyridinium disulfates, cetylpyridinium bromides, 4-alkylmercaptopyridines, poly(vinylpyridine)-dodecyl bromides, and dodecylbenzyltriethylammonium chlorides, but not limited to these. Further, an amphoteric surfactant includes aminocarboxylates, but not limited to these.

Furthermore, a nonionic surfactant includes, for example, polyoxyethylene alkyl ethers, polyoxyalkylene derivatives, polyoxyethylene phenyl ethers, sorbitan fatty acid esters, polyoxyethylene sorbitan fatty acid esters, and alkyl allyl ethers, but not limited to these. Specific examples include polyoxyethylene lauryl ethers, sorbitan fatty acid esters, and polyoxyethylene octylphenyl ethers, but not limited to these.

The surfactant selected is not limited to a single surfactant. Therefore, it is also possible to use two or more types of surfactants in combination. For example, a combination of an anionic surfactant and a nonionic surfactant, or a combination of a cationic surfactant and a nonionic surfactant can be used. In this case, the blending amount is preferably an appropriate blending amount for each surfactant component. A combination of an anionic surfactant and a nonionic surfactant is preferred. The anionic surfactant is preferably polycarboxylate. The nonionic surfactant is preferably polyoxyethylene phenyl ether.

Moreover, specifically, the resin-type dispersants include fluorine-based resin, cellulose derivatives (cellulose acetate, cellulose acetate butyrate, cellulose butyrate, cyanoethyl cellulose, ethyl hydroxyethyl cellulose, nitrocellulose, methyl cellulose, ethyl cellulose, hydroxyethyl cellulose, hydroxypropyl cellulose, hydroxypropyl methyl cellulose, carboxymethyl cellulose, etc.), polyvinyl alcohol, polyvinyl butyral, polyvinylpyrrolidone, hydrogenated nitrile butadiene rubber, polyacrylonitrile-based polymers, etc. In particular, fluorine-based resin, methyl cellulose, ethyl cellulose, carboxymethyl cellulose, polyvinyl alcohol, polyvinyl butyral, polyvinylpyrrolidone, hydrogenated nitrile butadiene rubber, and polyacrylonitrile-based polymers are preferred. The molecular weight of the resin-type dispersant is preferably 10,000 to 3,000,000.

The fluorine-based resin may have a structure in which the hydrogen of polyethylene is replaced by fluorine or trifluoromethyl. The fluorine-based resin includes, for example, homopolymers such as polytetrafluoroethylene (PTFE), polyvinyl fluoride (PVF), polyvinylidene fluoride (PVdF), and polychlorotrifluoroethylene (PCTFE); and copolymers such as perfluoroalkoxy alkane (PFA), perfluoro ethylene propene copolymer (FEP), ethylene tetrafluoroethylene copolymer (ETFE), ethylene chlorotrifluoroethylene copolymer (ECTFE), and tetrafluoroethylene-perfluorodioxysol copolymer (TPE/PDD). These may be used alone or in combination of two or more types. Among the fluorine-based resin, polytetrafluoroethylene (PTFE), polyvinyl fluoride (PVF), polyvinylidene fluoride (PVdF), resin having structural units of these, modified products of these, or a combination of these are preferred in terms of durability. Among these, polyvinylidene fluoride-based resin is preferred, which includes, for example, homopolymers of polyvinylidene fluoride; and copolymers of vinylidene fluoride with hexafluoropropylene, tetrafluoroethylene, etc. The polyvinylidene fluoride-based resin may be modified, for example, by introducing an acidic group such as a carboxyl group. The fluorine-based resin may be used alone or in combination of two or more types.

In order to maintain a good balance between durability, adhesion, and resin viscosity, the weight average molecular weight (Mw) of the fluorine-based resin is preferably 100,0000 to 5,000,000, more preferably 200,000 to 3,000,000, and even more preferably 500,000 to 1,500,000. The glass transition point of the fluorine-based resin is preferably 20°C or lower, more preferably 10°C or lower, and even more preferably 0°C or lower from the viewpoint of the film-forming properties of the electrode film.

Commercially available polyvinylidene fluoride and modified products thereof include, for example, KF polymer series (W#7300, W#7200, W#1700, W#1300, W#1100, W#9700, W#9300, W#9100, L#7305, L#7208, L#1710, L#1320, L#1120), etc. produced by Kureha Corporation and solef series (6008, 6010, 6012, 1015, 6020, 5130, 9007, 460, 41308, 11010, 21510, 31508, 60512), etc. produced by Solvay (all trade names).

From the viewpoint of the oxidation resistance of the dispersant, hydrogenated nitrile butadiene rubber, polyacrylonitrile-based polymers, and fluorine-based resin are preferred.

Among these, the dispersant is particularly preferably fluorine-based resin. From the viewpoint of uniformly dispersing and stably presenting multiple carbon nanotubes having different particle size distributions, fluorine-based resin is preferred in terms of the balance between the adsorption capacity to the carbon nanotubes and the affinity with the solvent. Furthermore, the fluorine-based resin functions not only as a dispersant for the carbon nanotubes but also as binder resin. By using the fluorine-based resin as a dispersant, the carbon nanotubes can be kept uniformly dispersed in the dispersed liquid during the mixture slurry preparation process in which other binder components and active materials are mixed, and even during the coating process for coating and drying, allowing the carbon nanotubes to form long conductive paths. In addition, the mass ratio of the fluorine-based resin to the carbon nanotubes is preferably 0.1 to 10, more preferably 0.5 to 8, and even more preferably 1 to 5, per 1 carbon nanotube. Within the above range, a uniform dispersed liquid can be obtained while maintaining excellent electrical conductivity.

In addition to the dispersant, it is preferable to add an amine compound or an inorganic base. As the amine compound, a first amine (primary amine), a second amine (secondary amine), and a third amine (tertiary amine) are used, and ammonia or a quaternary ammonium compound is not included. In addition to monoamines, amine-based compounds such as diamines, triamines, and tetraamines having multiple amino groups in the molecule can be used as the amine-based compound. Specific examples include aliphatic primary amines such as methylamine, ethylamine, butylamine, and octylamine; aliphatic secondary amines such as dimethylamine, diethylamine, and dibutylamine; aliphatic tertiary amines such as trimethylamine, triethylamine, and dimethyloctylamine; amino acids such as alanine, methionine, proline, serine, asparagine, glutamine, lysine, arginine, histidine, aspartic acid, glutamic acid, and cysteine; alkanolamines such as dimethylaminoethanol, monoethanolamine, diethanolamine, methylethanolamine, and triethanolamine; and alicyclic nitrogen-containing heterocyclic compounds such as hexamethylenetetramine, morpholine, and piperidine, but not limited to these. The inorganic base includes alkali metal hydroxides, alkaline earth metal hydroxides, alkali metal carbonates, alkaline earth metal carbonates, alkali metal phosphates, alkaline earth metal phosphates, etc.

From the viewpoint of the dispersion stability of the carbon nanotubes, the content of the dispersant is preferably 10 to 1000 parts by mass, and more preferably 20 to 500 parts by mass, relative to 100 parts by mass of the carbon nanotubes. Within the above range, it is possible to maintain a good dispersion state of each of the carbon nanotubes having different dispersibility.

### <Solvent>

The solvent in this embodiment is not limited as long as the solvent can disperse the carbon nanotubes, and water or an organic solvent such as an amide-based organic solvent can be used. From the viewpoint of the wettability of the carbon nanotubes, it is preferable to use an amide-based organic solvent. The amide-based organic solvent includes N-methyl-2-pyrrolidone (NMP), N-ethyl-2-pyrrolidone (NEP), N,N-dimethylformamide, N,N-dimethylacetamide, N,N-diethylacetamide, and N-methylcaprolactam. In particular, it is more preferable that the solvent includes at least one selected from the group consisting of N-methyl-2-pyrrolidone and N-ethyl-2-pyrrolidone.

In a case of using an organic solvent as the solvent, it is preferable that the solvent contains substantially no moisture from the viewpoint of suppressing thickening of the carbon nanotubes. Specifically, the moisture is preferably 100 ppm to 3000 ppm, more preferably 200 ppm to 1500 ppm, and preferably 1000 ppm or less, based on the carbon nanotube dispersed liquid. If a large amount of moisture is contained, there may be an adverse effect on the thickening or gelation of the carbon nanotube dispersed liquid or the electrode mixture slurry using the carbon nanotube dispersed liquid, but by keeping the moisture within this range, the carbon nanotubes having different dispersibility can be maintained in a good dispersion state, and the problem of the carbon nanotube dispersed liquid thickening during storage can be reduced.

### <Other optional components>

In some embodiments, the carbon nanotube dispersed liquid may appropriately include, as necessary, a wetting agent, a surfactant, a pH adjuster, a wetting penetrant, a leveling agent, other additives, and other conductive materials within a range that does not impair the objective of the present invention, which can be added at any timing, for example, before the dispersed liquid is prepared, during or after dispersion, or when an electrode-forming composition is prepared.

### <Method of producing the carbon nanotube dispersed liquid>

The method of producing the carbon nanotube dispersed liquid is not particularly limited, and it is preferable to produce the carbon nanotube dispersed liquid, for example, by finely dispersing a mixture containing the carbon nanotubes, the dispersant, the solvent, and optional components as required, through dispersion treatment using a dispersing device. In some embodiments, the carbon nanotube dispersed liquid preferably includes at least two types of carbon nanotubes, and the carbon nanotubes may be dispersed simultaneously, or pre-dispersed liquids in which the carbon nanotubes are dispersed separately may be produced and then the pre-dispersed liquids may be mixed to obtain the carbon nanotube dispersed liquid. The dispersion treatment may be multi-stage treatment in which the materials to be used are added in two or more stages by arbitrarily adjusting the timing of addition.

A dispersing machine that is usually used for dispersing pigments or the like can be used as the dispersing device. The dispersing device includes, for example, mixers such as a disperser, a homomixer, and a planetary mixer, homogenizers (such as Advanced Digital Sonifer (registered trademark) produced by BRANSON, MODEL 450DA, "CLEARMIX" produced by M-Technique, "FILMIX" by PRIMIX, and "Abramix" produced by Silverson), paint conditioners (produced by Red Devil), colloid mills ("PUC Colloid Mill" produced by PUC, "Colloid Mill MK" produced by IKA), cone mills (such as "Cone Mill MKO" produced by IKA), ball mills, sand mills (such as "DYNO-MILL" produced by Shinmaru Enterprises), attritors, pearl mills (such as "DCP Mill" produced by Eirich), media-type dispersers such as CoBall mills, high-pressure homogenizers (such as "Jenius PY" produced by Jenius, "Star Burst" produced by Sugino Machine, and "Nanomizer" produced by Nanomizer Inc.), media-less dispersers such as "Clear SS-5" produced by M-Technique and "MICROS" produced by Nara Machinery, other roll mills, etc. In particular, it is even more preferable to use a high shear mixer or a bead mill in the initial process of dispersion from the viewpoint of promoting wetting of the carbon nanotubes and disintegrating coarse particles, and then use a high-pressure homogenizer from the viewpoint of dispersing while maintaining the aspect ratio of the conductive material.

The dispersion systems using a dispersing device include batch dispersion, pass dispersion, circulation dispersion, etc., and any of these systems may be used, or two or more of these systems may be combined. Batch dispersion refers to a system in which dispersion is performed using only the dispersing device body without using piping or the like. Since it is easy to handle, batch dispersion is preferable for small-scale production. Pass dispersion refers to a dispersion system in which the dispersing device body is provided with a tank for supplying the liquid to be dispersed via piping and a tank for receiving the liquid to be dispersed, and the liquid is passed through the dispersing device body. Further, circulation dispersion refers to a system in which the liquid to be dispersed that has passed through the dispersing device body is returned to the tank that supplies the liquid to be dispersed, and dispersion is carried out while circulating the liquid. In either case, the dispersion progresses as the treatment time increases, so the pass or circulation may be repeated until the desired dispersion state is achieved, and the processing volume can be increased by changing the size of the tank or the treatment time. Pass dispersion is preferable in that it is easier to achieve a uniform dispersion state than circulation dispersion. Circulation dispersion is preferable in that the operation and production equipment are simpler than pass dispersion. In the dispersion process, the disintegration of aggregated particles, and the disintegration, wetting, and stabilization of the conductive material proceed sequentially or simultaneously, and the final dispersion state differs depending on how the process proceeds. Therefore, it is preferable to manage the dispersion state in each dispersion process by using various evaluation methods. For example, the dispersion state can be managed by the method described in the examples.

By uniformly and properly dispersing CNTs with long CNT fiber lengths while maintaining the lengths at a certain level or greater, a well-developed conductive network is formed. In particular, in some embodiments, the carbon nanotube dispersed liquid can form an efficient conductive network by dispersing two types of carbon nanotubes having different outer diameters (fiber diameters) and fiber lengths, i.e., different dispersibility, with a particularly appropriate degree of dispersion while maintaining the individual fibers in an appropriate manner without breakage, and bringing the carbon nanotubes into a stably disintegrated state. Therefore, it is not enough for the carbon nanotube dispersed liquid to simply have low viscosity and good (apparent) dispersibility, and it is particularly effective to judge the dispersion state by combining the complex modulus and phase angle with conventional indexes such as viscosity. By setting the complex modulus and phase angle within the ranges described below, it is possible to obtain a carbon nanotube dispersed liquid having good electrical conductivity and electrode strength.

### [Particle size distribution characteristics]

In some embodiments, the carbon nanotube dispersed liquid has particle size distribution peaks in a range where the particle size is 0.1 µm or more and 3 µm or less and in a range where the particle size is 10 µm or more and 100 µm or less, in a volume-based particle size distribution curve measured by a laser diffraction/scattering-type particle size distribution measuring method, and has a cumulative particle size D₅₀ of 4 µm or more.

From the viewpoint of the dispersion stability and good electrical conductivity of the carbon nanotubes, the small particle size side peak in the range where the particle size is 0.1 µm or more and 3 µm or less is preferably a particle size of 0.5 µm or more. In addition, the particle size is preferably 2 µm or less, and more preferably 1.5 µm or less. Although it is not certain, it is assumed that the peak on the small particle size side is derived from multi-walled carbon nanotubes. By setting the peak on the small particle size side within the above range, a carbon nanotube dispersed liquid in an appropriate dispersion state can be obtained. If the peak on the small particle size side exceeds the above range, the conductive material in an aggregated state exists, and if the peak exceeds the above range, a large number of finely broken conductive materials are generated, which may make it difficult to form an efficient conductive network. For example, the small particle size side peak may be a particle size of 0.1 µm or more and 3 µm or less, a particle size of 0.5 µm or more and 2 µm or less, or a particle size of 0.5 µm or more and 1.5 µm or less.

From the viewpoint of the dispersion stability and good electrical conductivity of the carbon nanotubes, the peak on the large particle size side in the range where the particle size is 10 µm or more and 100 µm or less is preferably a particle size of 15 µm or more, and more preferably 20 µm or more. In addition, the particle size is preferably 80 µm or less, and more preferably 50 µm or less. Although it is not certain, it is assumed that the peak on the large particle size side is derived from single-walled carbon nanotubes. By setting the peak on the large particle size side within the above range, a uniform dispersed liquid can be obtained while maintaining the excellent electrical conductivity of the single-walled carbon nanotubes, and furthermore, the carbon nanotubes do not aggregate even when dried for preparing a coating film, and can maintain a uniformly dispersed state even in the electrode after drying. For example, the peak on the large particle size side may be a particle size of 10 µm or more and 100 µm or less, a particle size of 15 µm or more and 80 µm or less, or a particle size of 20 µm or more and 50 µm or less.

The cumulative particle size D₅₀ is 4 µm or more, preferably 8 µm or more, and more preferably 10 µm or more. In addition, the cumulative particle size D₅₀ is preferably 100 µm or less, and more preferably 30 µm or less. By setting the cumulative particle size D₅₀ within the above range, the carbon nanotubes are in a disintegrated state in the dispersed liquid without being broken, which forms a carbon nanotube dispersed liquid having long conductive paths. Further, thickening due to structural viscosity between the carbon nanotubes can be suppressed, making it possible to achieve both electrical conductivity and stability. By setting the cumulative particle size D₅₀ to 4 µm or more, the carbon nanotubes are suppressed from being dispersed too finely to prevent an increase in the structural viscosity between the carbon nanotubes, thereby preventing deterioration of stability over time. Furthermore, there are sufficiently long conductive paths, making it possible to achieve compatibility with electrical conductivity. The cumulative particle size D₅₀ may be 4 µm or more and 100 µm or less, 8 µm or more and 50 µm or less, or 10 µm or more and 30 µm or less.

The laser diffraction/scattering-type particle size distribution can be determined by using a laser diffraction/scattering-type particle size distribution device under the conditions of a laser light transmittance of 60%. The measurement is performed using a dilution solvent that is the same as the solvent in the carbon nanotube dispersed liquid. Specifically, the distribution can be determined by the method described in the examples.

The laser diffraction/scattering-type particle size distribution measuring method can be used as one index showing the dispersed particle size and dispersion state, and is a measuring method for calculating a particle size distribution from information on scattered (diffracted) light from particles (in this specification, carbon nanotubes) when the particles are irradiated with laser light. In general, the intensity of scattered light from the particles is proportional to the diameter (perimeter) of the particles and inversely proportional to the wavelength of the incident laser light. The intensity also varies depending on the inherent refractive index of the particles. In a case where the particle size is large, the scattered light is concentrated forward, but when the particle size is smaller than the incident wavelength of the laser light, the scattered light is scattered in all directions, including sideward and backward. By detecting the scattered light with a detector and performing Fourier transformation, a continuous particle size distribution curve can be measured, with the horizontal axis representing particle size and the vertical axis representing volume-based frequency. The light transmittance of the laser correlates with the concentration of the sample at the time of measurement, and the transmittance increases as the sample becomes more dilute.

In some embodiments, the carbon nanotube dispersed liquid has at least two particle size distribution peaks in a volume-based particle size distribution curve, and the particle size at each particle size distribution peak refers to the most frequent particle size within the peak, and is also called the mode size.

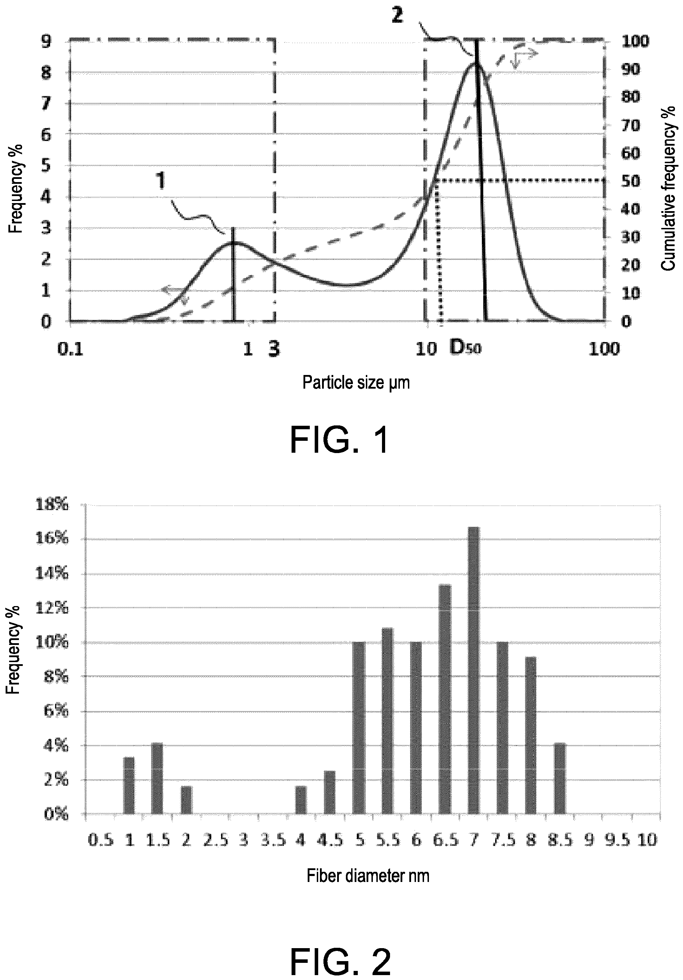

For example, the particle size distribution curve shown in FIG. 1 has two particle size distribution peaks, one at 0.7 µm in the particle size range of 0.1 µm or more and 3 µm or less, and the other at 19.9 µm in the particle size range of 10 µm or more and 100 µm or less, and the cumulative particle size D₅₀ is 11.1 µm.

As the fiber lengths of the carbon nanotubes in the carbon nanotube dispersed liquid increase, a conductive network can be formed efficiently with a smaller amount of carbon nanotubes, and the amount of conductive material required in the battery electrode can be reduced. However, carbon nanotubes with long fiber lengths have a strong cohesive force and are difficult to disperse. Furthermore, the carbon nanotubes are easily broken during the dispersion process, and it is also difficult to control the fiber lengths of the carbon nanotubes. As the particle size distribution characteristics of the carbon nanotubes in the carbon nanotube dispersed liquid are as described above, multiple carbon nanotubes can be stably dispersed without aggregation, and the stability over time can be improved. This makes it possible to form a conductive network efficiently with a small amount of carbon nanotubes, thereby reducing the amount of conductive material required in the battery electrode. In addition, it is possible to achieve both dispersibility and stability, and also to maintain good dispersion even in the electrode mixture slurry and/or the electrode film.

The particle size distribution characteristics of the carbon nanotube dispersed liquid can be controlled as described above by appropriately adjusting the type and blending amount of the carbon nanotubes used, the type and blending amount of the dispersant, the type of the solvent, or dispersion conditions. In particular, using multiple carbon nanotubes with different fiber diameters, using a combination of multi-walled carbon nanotubes and single-walled carbon nanotubes as carbon nanotubes, adjusting the blending amount of multiple carbon nanotubes, and controlling by the dispersion conditions are preferable for these are effective in achieving both the stability over time of the carbon nanotube dispersed liquid and the electrical conductivity of the battery.

### [Fiber diameter distribution]

The carbon nanotube dispersed liquid preferably has at least two fiber diameter distributions in a range where the fiber diameter is 0.1 nm or more and 20 nm or less in the fiber diameter distribution of carbon nanotubes measured by a transmission electron microscope. The fiber diameter distribution is determined by observing and photographing the carbon nanotubes in the carbon nanotube dispersed liquid with a transmission electron microscope, randomly selecting 300 carbon nanotubes from the photograph obtained, and measuring the fiber diameter of each. Further, the average fiber diameter (nm) of the carbon nanotubes is calculated from the number average. Specifically, the fiber diameter distribution and the average fiber diameter can be confirmed by a transmission electron microscope using the method described in the examples.

At least two fiber diameter distributions mean that there are at least two peaks in the fiber diameter distribution. Preferably, the two peaks do not overlap. In a case where the two peaks partially overlap, the region of small fiber diameters is defined as a first fiber diameter distribution (I) based on the fiber diameter at which the inflection point of the frequency (%) curve of the overlapping portion of the peaks is a minimum, and the region of large fiber diameters larger than this is defined as a second fiber diameter distribution (II).

The first fiber diameter distribution (I) is preferably in a range of 0.1 nm or more and less than 5 nm. More preferably, the minimum fiber diameter is 0.5 nm or more, and even more preferably 1 nm or more. More preferably, the maximum fiber diameter is less than 3 nm.

The second fiber diameter distribution (II) is preferably in a range of 3 nm or more and 20 nm or less. More preferably, the minimum fiber diameter is 5 nm or more. More preferably, the maximum fiber diameter is 10 nm or less.

For example, it is preferable that the first fiber diameter distribution (I) is 0.5 nm or more and less than 3 nm, and the second fiber diameter distribution (II) is 3 nm or more and 10 nm or less.

By setting the first fiber diameter distribution (I) and the second fiber diameter distribution (II) within this range, a dispersed liquid in which the carbon nanotubes are uniformly dispersed without forming entangled aggregates can be obtained. Furthermore, the carbon nanotubes do not aggregate even when dried for preparing a coating film, and can maintain a uniformly dispersed state even in the electrode after drying, thereby improving the output and cycle life of the secondary battery.

The content of the carbon nanotubes (I) constituting the first fiber diameter distribution (I) is preferably 10% or more, and more preferably 15% or more, on a number basis, based on the total amount of the carbon nanotubes. Further, the content is preferably 90% or less, more preferably 80% or less, and even more preferably 50% or less. In addition, the content of the carbon nanotubes (II) constituting the second fiber diameter distribution (II) is preferably 5% or more, more preferably 25% or more, and even more preferably 50% or more, on a number basis, based on the total amount of the carbon nanotubes. Further, the content is preferably 90% or less, and more preferably 85% or less. By containing the carbon nanotubes (I) and the carbon nanotubes (II) in amounts equal to or greater than the lower limits above, the structural viscosity between the carbon nanotubes can be suppressed, and a carbon nanotube dispersed liquid capable of forming short conductive paths and long conductive paths can be obtained.

The fiber diameter at the peak of the first fiber diameter distribution (I) is preferably 0.5 nm or more, and more preferably 1 nm or more. Further, the fiber diameter is preferably 3 nm or less, more preferably less than 3 nm, and even more preferably 2 nm or less. For example, the fiber diameter at the peak of the first fiber diameter distribution (I) may be 0.5 nm or more and 3 nm or less, 1 nm or more and less than 3 nm, or 1 nm or more and 2 nm or less.

The fiber diameter at the peak of the second fiber diameter distribution (II) is preferably 5 nm or more. Further, the fiber diameter is preferably 20 nm or less, and more preferably 15 nm or less. For example, the fiber diameter at the peak of the second fiber diameter distribution (II) may be 5 nm or more and 20 nm or less, 5 nm or more and 15 nm or less, 5 nm or more and 10 nm or less, or 6 nm or more and 8 nm or less.

For example, the difference between the fiber diameter at the peak of the first fiber diameter distribution (I) and the fiber diameter at the peak of the second fiber diameter distribution (II) may be 1 nm to 15 nm, 2 nm to 10 nm, 3 nm to 8 nm, or 4 nm to 6 nm.

In the carbon nanotube dispersed liquid of some embodiments, the content of carbon nanotubes with fiber lengths of 5.0 µm or less is preferably 90% or less, more preferably 85% or less, and even more preferably 75% or less, on a number basis, based on the total amount of carbon nanotubes. Further, the content of carbon nanotubes with fiber lengths greater than 5.0 µm is preferably 5% or more, more preferably 10% or more, and even more preferably 15% or more, on a number basis, based on the total amount of carbon nanotubes.

When the carbon nanotubes satisfy the above conditions, carbon nanotubes having different fiber diameter distributions can be dispersed without aggregation, and thickening over time can be suppressed, which is preferable because good dispersion can be maintained even in the electrode mixture slurry and/or the electrode film. The fiber lengths of the carbon nanotubes in the carbon nanotube dispersed liquid can be confirmed as follows. First, the carbon nanotubes are observed and photographed with a scanning electron microscope. Next, the fiber lengths can be confirmed by measuring the fiber lengths of the carbon nanotubes in the observed photograph. Then, the average fiber length is determined by randomly selecting 300 carbon nanotubes from the observed photograph, measuring the fiber length of each, and averaging the measured fiber lengths. In this specification, the fiber lengths of the carbon nanotubes refer to the fiber lengths in the carbon nanotube dispersed liquid, that is, the fiber lengths after the carbon nanotube dispersed liquid has been prepared.

### [pH]

The "pH" of the carbon nanotube dispersed liquid in some embodiments refers to the value measured using a general pH meter by adding water to the carbon nanotube dispersed liquid so that the solid content concentration after adding water is 50% when the solid content concentration before adding water is 100%, and can be measured, for example, by the following method.

While a carbon nanotube dispersed liquid having a solid content concentration of 2% is stirred with a disperser or the like, water is added so that the solid content concentration of the carbon nanotube dispersed liquid becomes 1%. After uniform stirring, the pH of the carbon nanotube dispersed liquid can be measured at 25°C by using a benchtop pH meter (SevenCompact S220 Expert Pro, produced by Mettler Toledo). The pH of the carbon nanotube dispersed liquid is preferably 8 or more. Further, the pH is preferably 12 or less, and more preferably 11 or less. By adjusting the pH to within the above range, the wettability of the CNTs can be improved, and furthermore, the stability of the dispersed liquid can be improved. It is preferable for the pH to be within the above range because problems such as corrosion of various raw materials and exterior materials in the battery or gelation of the binder are easily suppressed. For example, the pH of the carbon nanotube dispersed liquid may be 8 to 12 or 8 to 11. To be more specific, the pH of the carbon nanotube dispersed liquid may be 8.0 to 12.0, 8.5 to 11.5, or 7.0 to 11.0.

The pH of the carbon nanotube dispersed liquid can be adjusted by (1) the amount of metal hydroxide contained in the CNTs, (2) the type and amount of functional groups on the CNT surface, and (3) the type and amount of base added. By adjusting the pH with all of the above factors (1) to (3) taken into account, not only the wettability of the CNTs is improved, but the dispersant that contributes to the dispersion of the carbon nanotubes can also be stabilized without competing even when multiple carbon nanotubes with different dispersibility are used in combination, making it possible to obtain a carbon nanotube dispersed liquid that is excellent not only in dispersibility but also in stability. It is also preferable to adjust the pH of the carbon nanotube dispersed liquid to an appropriate range in terms of obtaining a buffering effect which corresponds to the pH change that occurs when the active material and binder resin are mixed in producing the electrode mixture slurry.

### [Complex modulus and phase angle]

The dispersibility of the carbon nanotube dispersed liquid of this embodiment can be evaluated by the complex modulus and phase angle obtained by dynamic viscoelasticity measurement, and the complex modulus and phase angle can be measured by the method described in the examples. The complex modulus of the carbon nanotube dispersed liquid indicates the hardness of the carbon nanotube dispersed liquid, and tends to be smaller as the dispersibility of the carbon nanotubes improves and as the viscosity of the carbon nanotube dispersion composition decreases. However, in a case where the fiber lengths of the carbon nanotubes are large, even if the carbon nanotubes are uniformly and stably disintegrated in the medium, the complex modulus may be a high value due to the structural viscosity of the carbon nanotubes themselves. In addition to the dispersion state of the carbon nanotubes, the complex modulus also changes due to the entanglement of the carbon nanotubes, the dispersant, and other resin components, or the influence of the intermolecular forces between these. Furthermore, the phase angle means the phase shift of the stress wave when the strain applied to the carbon nanotube dispersed liquid is a sine wave. For a purely elastic body, the phase angle is a sine wave in phase with the applied strain, so the phase angle is 0°. On the other hand, for a purely viscous body, the phase angle is a stress wave that propagates by 90°. In a general viscoelasticity measurement sample, the phase angle is a sine wave greater than 0° and less than 90°, and if the carbon nanotubes in the carbon nanotube dispersed liquid have good dispersibility, the phase angle approaches 90°, which is a purely viscous body. However, similar to the complex modulus, in a case where the conductive material itself has structural viscosity, the phase angle may be a low value even if the conductive material is uniformly and stably disintegrated in the dispersion medium. Besides, similar to the complex modulus, in addition to the dispersion state of the carbon nanotubes, the phase angle also changes due to the entanglement of the carbon nanotubes, the dispersant, and other resin components, or the influence of the intermolecular forces between these.

In the carbon nanotube dispersed liquid of this embodiment, aggregation of multiple carbon nanotubes is suppressed by controlling the particle size distribution characteristics of the carbon nanotubes in the dispersed liquid within specific range conditions and by highly controlling the hardness structural viscosity of the dispersed liquid in relation to the fiber diameter and fiber length of such carbon nanotubes, and the carbon nanotube dispersed liquid has excellent stability over time. Furthermore, when using this carbon nanotube dispersed liquid to prepare an electrode mixture slurry and when producing an electrode film, the good dispersion state can be maintained, making it possible to form a good conductive network in the electrode.

The complex modulus due to dynamic viscoelasticity of the carbon nanotube dispersed liquid of this embodiment is preferably 5 Pa to 800 Pa, and more preferably 5 Pa to 400 Pa.

The phase angle of the carbon nanotube dispersed liquid of this embodiment is preferably 3° to 50°, and more preferably 7° to 50°.

Furthermore, when the complex modulus X (Pa) and the phase angle Y (°) are within the above-mentioned preferred ranges and the product thereof (X×Y) is 15 or more and 5,000 or less, an electrode film having high fluidity and very good electrical conductivity can be obtained.

The amount of carbon nanotubes in the carbon nanotube dispersed liquid of this embodiment is preferably 0.4 parts by mass to 5.0 parts by mass, and more preferably 0.4 parts by mass to 3.0 parts by mass, relative to 100 parts by mass of the carbon nanotube dispersed liquid.

The viscosity of the carbon nanotube dispersed liquid of this embodiment, measured using a B-type viscometer at 60 rpm, is preferably 10,000 mPa·s or less, more preferably 6,000 mPa·s or less, and even more preferably 3,000 mPa·s or less.

### <Electrode mixture slurry>

The electrode mixture slurry includes a carbon nanotube dispersed liquid and a positive electrode active material or a negative electrode active material. The electrode mixture slurry may also include binder resin, other conductive materials, and a solvent, and may further mix optional components therein. In this specification, the positive electrode active material and the negative electrode active material may be simply referred to as "active material." The active material refers to a material that is the basis of battery reaction. The active material is divided into the positive electrode active material and the negative electrode active material based on the electromotive force. In this specification, the electrode mixture slurry including the positive electrode active material or the negative electrode active material may be referred to as "positive electrode slurry," "negative electrode slurry," "mixture slurry," or simply as "electrode slurry." The electrode mixture slurry is preferably in a slurry form in order to improve uniformity and processability.

### <Positive electrode active material>

The positive electrode active material is not particularly limited. For example, for secondary battery applications, metal compounds such as metal oxides and metal sulfides capable of reversibly doping or intercalating lithium ions can be used. The positive electrode active material includes, for example, lithium and transition metal composite oxide powders such as lithium manganese composite oxide (for example, LiₓMn₂O₄ or LiₓMnO₂), lithium nickel composite oxide (for example, LiₓNiO₂), lithium cobalt composite oxide (LiₓCoO₂), lithium nickel cobalt composite oxide (for example, LiₓNi_{1-y}Co_{y}O₂), lithium manganese cobalt composite oxide (for example, LiₓMn_{y}Co_{1-y}O₂), lithium nickel manganese cobalt composite oxide (for example, LiₓNi_{y}Co_{z}Mn_{1-y-z}O₂), and spinel-type lithium manganese nickel composite oxide (for example, LiₓMn_{2-y}Ni_{y}O₄), lithium phosphate powders having an olivine structure (for example, LiₓFePO₄, LiₓFe_{1-y}Mn_{y}PO₄, and LiₓCoPO₄), transition metal oxide powders such as manganese oxide, iron oxide, copper oxide, nickel oxide, vanadium oxide (for example, V₂O₅, V₆O₁₃), and titanium oxide, and transition metal sulfide powders such as iron sulfate (Fe₂(SO₄)₃), TiS₂, and FeS. Here, x, y, and z are numbers, and 0<x<1, 0<y<1, 0<z<1, and 0<y+z<1. These positive electrode active materials can be used alone or in combination of two or more. Among these active materials, active materials including Ni and/or Mn in particular (particularly when the total amount of Ni and/or Mn in the transition metals is 50 mol % or more) tend to become highly basic due to the elution of components derived from the raw materials or metal ions, which may easily cause gelation of the binder or deterioration of the dispersion state, and for this reason, the problems described in the present invention become more notable. Therefore, the present invention is particularly effective for a case where the battery includes an active material that contains Ni and/or Mn.

### <Negative electrode active material>

The negative electrode active material is not particularly limited. For example, metal Li or alloys thereof capable of reversibly doping or intercalating lithium ions, tin alloys, silicon alloy negative electrodes, metal oxides such as LiₓTiO₂, LiₓFe₂O₃, LiₓFe₃O₄, and LiₓWO₂, conductive polymers such as polyacetylene and poly-p-phenylene, artificial graphite such as highly graphitized carbon materials, carbonaceous powders such as natural graphite, and resin-sintered carbon materials can be used. Here, x is a number, and 0<x<1. These negative electrode active materials can be used alone or in combination of two or more. In particular, in a case where a silicon alloy negative electrode is used, the theoretical capacity is large but the volume expansion is extremely large, so it is preferable to use a silicon alloy negative electrode in combination with artificial graphite such as highly graphitized carbon materials, carbonaceous powders such as natural graphite, and resin-sintered carbon materials.

The content of CNTs in the electrode mixture slurry is preferably 0.01% by mass or more, more preferably 0.05% by mass or more, and even more preferably 0.10% or more, based on the mass of the active material (the mass of the active material being 100% by mass). Further, the content is preferably 10% by mass or less, more preferably 5% by mass or less, and even more preferably 3% by mass or less. Furthermore, in a case where carbon black is further included as a conductive material, the content of carbon black is preferably 0.1% by mass or more, more preferably 0.5% by mass or more, and even more preferably 1% or more, based on the mass of the active material (the mass of the active material being 100% by mass). Further, the content is preferably 20% by mass or less, and more preferably 10% by mass or less. In a case where carbon nanotubes and carbon black are used in combination as the conductive material, the total amount added is preferably within the above range. If the amount exceeds the above range, the amount of active material filled in the electrode decreases, resulting in a lower capacity battery. If the amount is below the above range, the electrical conductivity of the electrode and the battery may be insufficient.

The content of the dispersant in the electrode mixture slurry is preferably 0.01% by mass or more, and more preferably 0.02% by mass or more, based on the mass of the active material (the mass of the active material being 100% by mass). Further, the content is preferably 10% by mass or less, and more preferably 5% by mass or less.

### <Binder resin>

In a case where the electrode mixture slurry further includes binder resin, there is no particular limitation as long as the binder resin is binder resin usually used for paints, and can be appropriately selected according to the purpose. In addition, the binder resin used in the electrode mixture slurry is resin capable of binding materials such as active materials and conductive materials together. The binder resin used in the electrode mixture slurry includes, for example, polymers or copolymers containing, as constituent units, ethylene, propylene, vinyl chloride, vinyl acetate, vinyl alcohol, maleic acid, acrylic acid, acrylic acid esters, methacrylic acid, methacrylic acid esters, acrylonitrile, styrene, vinyl butyral, vinyl acetal, and vinyl pyrrolidone; polyurethane resin, polyester resin, phenolic resin, epoxy resin, phenoxy resin, urea resin, melamine resin, alkyd resin, acrylic resin, formaldehyde resin, silicone resin, and fluororesin; cellulose resin; elastomers such as styrene-butadiene rubber and fluororubber; and conductive resin such as polyaniline and polyacetylene. Modified products, mixtures, and copolymers of these resin may also be used. Among these, for use as the binder resin for the positive electrode, it is preferable to use the above fluorine-based resin such as polyvinylidene fluoride, polyvinyl fluoride, and tetrafluoroethylene as the binder resin in terms of durability. In addition, for use as the binder resin for the negative electrode, CMC (carboxymethyl cellulose), styrene butadiene rubber, polyacrylic acid, etc., which have good adhesion, are preferred.

In a case where the electrode mixture slurry includes binder resin, the content of the binder resin in the electrode mixture slurry is preferably 0.5% by mass or more, and more preferably 0.5% by mass or more, based on the mass of the active material (the mass of the active material being 100% by mass). Further, the content is preferably 30% by mass or less, more preferably 25% by mass or less, and even more preferably 20% by mass or less.

The solid content in the electrode mixture slurry is preferably 30% by mass or more, and more preferably 40% by mass or more, based on the mass of the electrode mixture slurry (the mass of the electrode mixture slurry being 100% by mass). Further, the solid content is preferably 90% by mass or less, and more preferably 80% by mass or less.

The electrode mixture slurry can be prepared by various conventionally known methods, which include, for example, a method of adding an active material to the carbon nanotube dispersed liquid; a method of adding an active material to the carbon nanotube dispersed liquid and then adding binder resin; and a method of adding binder resin to the carbon nanotube dispersed liquid and then adding an active material.

The dispersing device used for dispersion is not particularly limited. The electrode mixture slurry can be obtained by using the dispersing means mentioned in the description of the carbon nanotube dispersed liquid. Therefore, the electrode mixture slurry may be prepared by processing of adding and dispersing the electrode active material without adding binder resin to the carbon nanotube dispersed liquid.

### <Electrode film>

The electrode film includes at least one selected from the group consisting of a film formed using the carbon nanotube dispersed liquid and a film formed using the electrode mixture slurry. The electrode film may further include a current collector. The electrode film can be obtained, for example, by applying the electrode mixture slurry onto the current collector and drying the electrode mixture slurry, and includes the current collector and a film. The electrode film formed using the positive electrode mixture composition can be used as a positive electrode. The electrode film formed using the negative electrode mixture composition can be used as a negative electrode. In this specification, the film formed using the electrode mixture slurry that includes an active material may be referred to as "electrode mixture layer."

The material and shape of the current collector used to form the electrode film are not particularly limited, and can be appropriately selected from those suitable for various secondary batteries. The material of the current collector includes, for example, conductive metals or alloys such as aluminum, copper, nickel, titanium, and stainless steel. As for the shape, a flat foil is generally used, but a current collector with a roughened surface, a perforated foil current collector, or a mesh current collector can also be used. The thickness of the current collector is preferably about 0.5 µm to 30 µm.

The method for applying the carbon nanotube dispersed liquid or the electrode mixture slurry onto the current collector is not particularly limited, and any known method can be used. Specific examples include a die coating method, a dip coating method, a roll coating method, a doctor coating method, a knife coating method, a spray coating method, a gravure coating method, a screen printing method, and an electrostatic painting method. The drying method includes, for example, natural drying or drying using a blower dryer, a hot air dryer, an infrared heater, a far infrared heater, or the like, but is not particularly limited to these.

After coating, rolling treatment may be performed using a lithographic press, a calendar roll, or the like. The thickness of the formed film is, for example, 1 µm or more and 500 µm or less, and preferably 10 µm or more and 300 µm or less.

The film formed using the carbon nanotube dispersed liquid or the electrode mixture slurry may also be used as a base layer for the electrode mixture layer in order to improve adhesion between the electrode mixture layer and the current collector or to improve the electrical conductivity of the electrode film.

### <Secondary battery>

The secondary battery includes a positive electrode, a negative electrode, and an electrolyte, and at least one selected from the group consisting of the positive electrode and the negative electrode includes the electrode film.

As the electrolyte, various conventionally known electrolytes that allow ions to move can be used, which include, for example, electrolytes containing lithium salts such as LiBF₄, LiClO₄, LiPF₆, LiAsF₆, LiSbF₆, LiCF₃SO₃, Li(CF₃SO₂)₂N, LiC₄F₉SO₃, Li(CF₃SO₂)₃C, LiI, LiBr, LiCl, LiAlCl, LiHF₂, LiSCN, and LiBPh₄ (wherein Ph is a phenyl group), but not limited to these. The electrolyte is preferably dissolved in a non-aqueous solvent and used as an electrolytic solution.

The non-aqueous solvent is not particularly limited, and includes, for example, carbonates such as ethylene carbonate, propylene carbonate, butylene carbonate, dimethyl carbonate, ethyl methyl carbonate, and diethyl carbonate; lactones such as γ-butyrolactone, γ-valerolactone, and γ-octanoic lactone; glymes such as tetrahydrofuran, 2-methyltetrahydrofuran, 1,3-dioxolane, 4-methyl-1,3-dioxolane, 1,2-methoxyethane, 1,2-ethoxyethane, and 1,2-dibutoxyethane; esters such as methyl formate, methyl acetate, and methyl propionate; sulfoxides such as dimethyl sulfoxide and sulfolane; and nitriles such as acetonitrile. These solvents may be used alone or in combination of two or more.

A non-aqueous electrolyte secondary battery preferably includes a separator. The separator includes, for example, polyethylene nonwoven fabric, polypropylene nonwoven fabric, polyamide nonwoven fabric, and nonwoven fabrics obtained by applying hydrophilic treatment to these, but not particularly limited to these.

The structure of the non-aqueous electrolyte secondary battery of this embodiment is not particularly limited, but usually includes a positive electrode and a negative electrode, and a separator that is provided as necessary, and can have various shapes according to the purpose of use, such as a paper type, a cylindrical type, a button type, and a laminated type.

### Examples

The present invention will be described in more detail hereinafter based on examples. The present invention is not limited to the following examples as long as it does not depart from the gist of the present invention. Unless otherwise specified, "parts" means "parts by mass" and "%" means "% by mass." Carbon nanotubes may also be referred to as "CNT."

### <Average fiber diameter of carbon nanotubes>

The average fiber diameter of the carbon nanotubes can be calculated by forming a film using a diluted solution of the carbon nanotubes, directly observing the film at a magnification of 50,000 times using a transmission electron microscope (H-7650, produced by Hitachi, Ltd.), measuring the fiber diameters of 300 randomly selected carbon nanotubes, and averaging the measured fiber diameters.

### <Laser diffraction/scattering-type particle size distribution measurement of carbon nanotube dispersed liquid>

The particle size distribution was measured using a laser diffraction/scattering-type particle size distribution measuring device (Horiba, Ltd.; Partical LA-960V2). This measuring device had a laser light wavelength of 650 nm, and was equipped with one ring-shaped 64-segment silicon photodiode, five 4ch array detectors, and three silicon photodetectors as detectors. Further, the measuring section used a flow-type cell (sample cell) made of synthetic quartz. First, NMP, which was the same solvent as the dispersed liquid, was charged into a sample bath including the sample cell, and circulation/ultrasonic cleaning was carried out. The operating modes were: circulation speed: 3, ultrasonic intensity: 7, ultrasonic time of 1 minute, stirring speed: 7, stirring mode: continuous. Subsequently, in order to remove air, an ultrasonic operation was performed with ultrasonic intensity: 7 for an ultrasonic time of 5 seconds, after which a blank (background) measurement was carried out. The particle size was based on volume, the particle refractive index was set to 1.920-0.522i (carbon material), and the solvent refractive index was set to 1.468 (NMP). The dispersed liquid was dropped so that the laser light transmittance during measurement was 60%±1%, and the sample was adjusted. The operating modes during measurement were: circulation speed: 3, stirring speed: 7, stirring mode: continuous. For example, FIG. 1 is a graph showing a distribution diagram of particle size frequency of the carbon nanotube dispersed liquid 1, in which the left vertical axis represents the frequency (%) relative to the total, and the right vertical axis corresponds to the cumulative frequency.

### <CNT fiber diameter of carbon nanotube dispersed liquid>

The carbon nanotube dispersed liquid was appropriately diluted, and several µL of the diluted solution was dropped onto the collodion film. After drying at room temperature, the film was directly observed using a transmission electron microscope (H-7650, produced by Hitachi, Ltd.). Observation was performed at a magnification of 50,000 times, and multiple photographs were taken in which 10 or more CNTs were included within the field of view. The fiber diameters of 300 randomly selected carbon nanotubes were measured. The fiber diameters of 300 randomly selected carbon nanotubes were plotted with the frequency (%) based on the number on the vertical axis and the fiber diameter (nm) on the horizontal axis to confirm the fiber diameter distribution. For example, FIG. 2 is a graph showing a distribution diagram of fiber diameters of the carbon nanotube dispersed liquid 1, with the frequency (%) on the vertical axis corresponding to the "content based on the number relative to the total amount of carbon nanotubes."

### <pH of carbon nanotube dispersed liquid>

After leaving the carbon nanotube dispersed liquid in a thermostatic tank at 25°C for at least 1 hour, the carbon nanotube dispersed liquid was thoroughly stirred to adjust the solid content concentration of the carbon nanotube dispersed liquid to 100%, and water was added to the carbon nanotube dispersed liquid while stirring with a disperser so that the solid content concentration of the carbon nanotube dispersed liquid became 50%. After stirring uniformly, the pH was measured at 25°C using a benchtop pH meter (SevenCompact S220 Expert Pro, produced by Mettler Toledo).

Details of the materials used in this example are as follows.

### <Carbon nanotubes>

CNT (1-1): TUBALL 01RW03 (produced by OCSiAl, single-walled carbon nanotube)
CNT (1-2): TUBALL 01RW02 (produced by OCSiAl, single-walled carbon nanotube)
CNT (1-3): TNSAR (produced by Timesnano, single-walled carbon nanotube)
CNT (2-1): JENOTUBE6A (produced by JEIO, multi-walled carbon nanotube)
CNT (2-2): JENOTUBE10B (produced by JEIO, multi-walled carbon nanotube)
CNT (2-3): CNT (2-1) subjected to the following purification treatment
CNT (2-4): CNT (2-2) subjected to the following purification treatment
CNT (3-1): VGCF (produced by Showa Denko K.K., carbon nanofiber)

### (Production of CNT (2-3): carbon nanotube purification treatment)

10 kg of CNT (2-1) (JENOTUBE6A, produced by JEIO Corporation) was weighed into a 120 L heat-resistant container, and the heat-resistant container containing the CNT was placed in a furnace. Thereafter, nitrogen gas was introduced into the furnace to discharge the air in the furnace while maintaining a positive pressure. After the oxygen concentration in the furnace became 0.1% or less, the furnace was heated to 1500°C over 30 hours. While the temperature inside the furnace was maintained at 1500°C, chlorine gas was introduced at a rate of 50 L/min for 100 hours. Thereafter, nitrogen gas was introduced at 50 L/min to maintain a positive pressure and the furnace was cooled to obtain CNT (2-3).

### (Production of CNT (2-4): carbon nanotube purification treatment)

CNT (2-4) was obtained in the same manner as in the production of CNT (2-3), except that CNT (2-1) was changed to CNT (2-2).

The average fiber diameter [nm] and BET specific surface area [m²/g] of the CNT are shown below.

### [Table 1]

**Table 1.**

| CNT | Product name | Structure | Average fiber diameter [nm] | BET specific surface area [m²/g] |
|---|---|---|---|---|
| CNT (1-1) | TUBALL 01RW03, produced by OCSiAl | Single-walled nanotube | 1.5 | 980 |
| CNT (1-2) | TUBALL 01RW02, produced by OCSiAl | Single-walled nanotube | 1.8 | 520 |
| CNT (1-3) | TNSAR, produced by Timesnano | Single-walled nanotube | 1.3 | 950 |
| CNT (2-1) | JEIOTUBE 6A, produced by JEIO | Multi-walled nanotube | 6 | 730 |
| CNT (2-2) | JEIOTUBE 10B, produced by JEIO | Multi-walled nanotube | 10 | 240 |
| CNT (2-3) | CNT (2-1) purification treatment | Multi-walled nanotube | 6 | 500 |
| CNT (2-4) | CNT (2-2) purification treatment | Multi-walled nanotube | 10 | 180 |
| CNT (3-1) | VGCF, produced by Showa Denko K.K. | Carbon nanofiber | 150 | 13 |

### <Dispersant>

Dispersant (B-1): Therban (R) 4307 (produced by ARLANXEO Corporation, hydrogenated acrylonitrile-based rubber, acrylonitrile content 43.0%)
Dispersant (B-2): Zetpole (R) 3300 (produced by Zeon Corporation, hydrogenated acrylonitrile-based rubber, acrylonitrile content 23%)
Dispersant (B-3): polyvinylpyrrolidone (produced by Nippon Shokubai Co., Ltd., K-30, weight average molecular weight 40,000)
Dispersant (B-4): polyvinyl butyral resin (produced by Sekisui Chemical Co., Ltd., BL-10, calculated molecular weight 15,000)
Dispersant (B-5): PVDF: polyvinylidene fluoride (Solef #5130 (produced by Solvey Corporation), solid content 100%)

### <Additive>

NaOH: sodium hydroxide (produced by FUJIFILM Wako Pure Chemical Corporation, special grade reagent)
KOH: potassium hydroxide (produced by FUJIFILM Wako Pure Chemical Corporation, special grade reagent)
2-aminoethanol (produced by FUJIFILM Wako Pure Chemical Corporation, Wako Grade 1)

### (Production Example 1; preparation of carbon nanotube pre-dispersed liquid 1)

According to the composition shown in Table 2, 2 parts of dispersant (B-1) and 97.6 parts of NMP (N-methyl-2-pyrrolidone) were added into a stainless steel container, and the mixture was stirred with a disperser until the mixture became uniform. Thereafter, 0.4 parts of CNT (1-1) was added while stirring with a disperser, and a high shear mixer (L5M-A, produced by SILVERSON) equipped with a square hole high shear screen was used to perform batch dispersion at a speed of 8,500 rpm until the entire mixture became uniform. Next, the content of the stainless steel container was transferred and subjected to circulation dispersion treatment for a residence time of 10 minutes using a bead mill (DYNO-MILL MULTI LAB, produced by Shinmaru Enterprises) filled with zirconia beads having a diameter of 1.0 mm ø. Subsequently, the liquid to be dispersed was supplied from the stainless steel container to a high-pressure homogenizer (Star Burst Lab HJP-17007, produced by Sugino Machine) via piping, and pass dispersion treatment was carried out 20 times to obtain the carbon nanotube pre-dispersed liquid 1. The dispersion treatment was performed using a single nozzle chamber with a nozzle diameter of 0.25 mm and a pressure of 100 MPa.

### (Production Examples 2 to 4 and 6 to 16; carbon nanotube pre-dispersed liquids 2 to 4 and 6 to 16)

According to the compositions shown in Table 2, each dispersed liquid (carbon nanotube pre-dispersed liquids 2 to 16) was obtained in the same manner as in Production Example 1. In Production Examples 13 to 15, the bases shown in Table 2 were added as additives together with the dispersants, and the other procedures were the same as in Example 1 to prepare the dispersed liquids.

### (Production Example 5; carbon nanotube pre-dispersed liquid 5)

According to the composition shown in Table 2, 2 parts of dispersant (B-1) and 97.6 parts of NMP were added into a stainless steel container, and the mixture was stirred with a disperser until the mixture became uniform. Thereafter, 0.4 parts of CNT (1-1) was added while stirring with a disperser, and a high shear mixer (L5M-A, produced by SILVERSON) equipped with a square hole high shear screen was used to perform batch dispersion at a speed of 8,500 rpm until the entire mixture became uniform. Next, the content of the stainless steel container was transferred and subjected to circulation dispersion treatment for a residence time of 30 minutes using a bead mill (DYNO-MILL MULTI LAB, produced by Shinmaru Enterprises) filled with zirconia beads having a diameter of 1.0 mm ø. Subsequently, the liquid to be dispersed was supplied from the stainless steel container to a high-pressure homogenizer (Star Burst Lab HJP-17007, produced by Sugino Machine) via piping, and pass dispersion treatment was carried out 20 times. The dispersion treatment was performed using a single nozzle chamber with a nozzle diameter of 0.25 mm and a pressure of 100 MPa.

### [Table 2]

**Table 2.**

| | | CNT | | Dispersant | | Solvent | Additive | |
|---|---|---|---|---|---|---|---|---|
| | | Type | Addition amount (parts) | Type | Addition amount (parts) | Addition amount (parts) | Type | Addition amount (parts) |
| Production Example 1 | CNT pre-dispersed liquid 1 | CNT (1-1) | 0.4 | (B-1) | 2 | 97.6 | - | - |
| Production Example 2 | CNT pre-dispersed liquid 2 | CNT (1-1) | 0.4 | (B-5) | 2 | 97.6 | - | - |
| Production Example 3 | CNT pre-dispersed liquid 3 | CNT (1-2) | 0.4 | (B-5) | 2 | 97.6 | - | - |
| Production Example 4 | CNT pre-dispersed liquid 4 | CNT (1-3) | 0.4 | (B-5) | 2 | 97.6 | - | - |
| Production Example 5 | CNT pre-dispersed liquid 5 | CNT (1-1) | 0.4 | (B-1) | 2 | 97.6 | - | - |
| Production Example 6 | CNT pre-dispersed liquid 6 | CNT (2-1) | 1.5 | (B-1) | 0.75 | 98.5 | - | - |
| Production Example 7 | CNT pre-dispersed liquid 7 | CNT (2-1) | 1.5 | (B-2) | 0.75 | 98.5 | - | - |
| Production Example 8 | CNT pre-dispersed liquid 8 | CNT (2-1) | 1.5 | (B-3) | 0.75 | 98.5 | - | - |
| Production Example 9 | CNT pre-dispersed liquid 9 | CNT (2-1) | 1.5 | (B-4) | 0.75 | 98.5 | - | - |
| Production Example 10 | CNT pre-dispersed liquid 10 | CNT (2-2) | 1.5 | (B-1) | 0.5 | 97.5 | - | - |
| Production Example 11 | CNT pre-dispersed liquid 11 | CNT (2-3) | 1.5 | (B-1) | 0.75 | 97 | - | - |
| Production Example 12 | CNT pre-dispersed liquid 12 | CNT (2-4) | 1.5 | (B-1) | 0.5 | 97.5 | - | - |
| Production Example 13 | CNT pre-dispersed liquid 13 | CNT (2-3) | 1.5 | (B-1) | 0.75 | 97 | NaOH | 0.03 |
| Production Example 14 | CNT pre-dispersed liquid 14 | CNT (2-3) | 1.5 | (B-1) | 0.75 | 97 | KOH | 0.03 |
| Production Example 15 | CNT pre-dispersed liquid 15 | CNT (2-3) | 1.5 | (B-1) | 0.75 | 97 | Ethanol amine | 0.03 |
| Production Example 16 | CNT pre-dispersed liquid 16 | CNT (3-1) | 0.4 | (B-5) | 2 | 97.6 | - | - |

### (Example A-1)

Carbon nanotube pre-dispersed liquid 1 and carbon nanotube pre-dispersed liquid 6 prepared in Production Example 1 were weighed into a stainless steel container to reach a CNT mass ratio of 1:5. Thereafter, the mixture was stirred with a disperser until the mixture became uniform, and carbon nanotube dispersed liquid 1 was obtained.

### (Examples A-2 to A-17, Comparative Examples A-1 to A-3)

Except for changing the composition and blending amount (parts by mass) to those shown in Table 2, the same procedures as in Example A-1 were carried out to obtain each of the carbon nanotube dispersed liquids (carbon nanotube dispersed liquids 2 to 17 and 20 to 22).

### (Example A-18)

1.20 parts of dispersant (B-1) and 97.84 parts of NMP were added into a stainless steel container, and the mixture was stirred with a disperser until the mixture became uniform. Thereafter, 0.80 parts of CNT (2-1) was weighed out and added while stirring with a disperser, and a high shear mixer (L5M-A, produced by SILVERSON) equipped with a square hole high shear screen was used to perform batch dispersion at a speed of 8,600 rpm until the entire mixture became uniform. Thereafter, the mixture was supplied from the stainless steel container to a high-pressure homogenizer (Star Burst Lab HJP-17007, produced by Sugino Machine) via piping, and pass dispersion treatment was carried out 20 times. Then, 0.16 parts of CNT (1-1) was supplied to the high-pressure homogenizer, and pass dispersion treatment was carried out another 10 times to obtain the carbon nanotube dispersed liquid 20. The dispersion treatment was performed using a single nozzle chamber with a nozzle diameter of 0.25 mm and a pressure of 100 MPa.

### (Example A-19)

0.40 parts of dispersant (B-1) and 47.84 parts of NMP were added into a stainless steel container, and the mixture was stirred with a disperser until the mixture became uniform. Thereafter, 0.80 parts of CNT (2-1) was weighed out and added while stirring with a disperser, and a high shear mixer (L5M-A, produced by SILVERSON) equipped with a square hole high shear screen was used to perform batch dispersion at a speed of 8,600 rpm until the entire mixture became uniform, thereby obtaining the carbon nanotube pre-dispersed liquid 21a. In addition, 0.80 parts of dispersant (B-5) and 50.00 parts of NMP were added into a stainless steel container, and the mixture was stirred with a disperser until the mixture became uniform. Thereafter, 0.16 parts of CNT (1-1) was weighed out and added while stirring with a disperser, and a high shear mixer (L5M-A, produced by SILVERSON) equipped with a square hole high shear screen was used to perform batch dispersion at a speed of 8,600 rpm until the entire mixture became uniform, thereby obtaining the carbon nanotube pre-dispersed liquid 21b.

Thereafter, the carbon nanotube pre-dispersed liquid 21a was supplied from the stainless steel container to a high-pressure homogenizer (Star Burst Lab HJP-17007, produced by Sugino Machine) via piping, and pass dispersion treatment was carried out 20 times. Then, the carbon nanotube pre-dispersed liquid 21b was supplied to the high-pressure homogenizer via piping, and pass dispersion treatment was carried out another 10 times to obtain the carbon nanotube dispersed liquid 20. The dispersion treatment was performed using a single nozzle chamber with a nozzle diameter of 0.25 mm and a pressure of 100 MPa.

### [Table 3]

**Table 3.**

| | CNT dispersed liquid | CNT dispersed liquid 1 | | CNT dispersed liquid 2 | | CNT mass ratio | | | | Fluorore sin/CNT mass ratio |
|---|---|---|---|---|---|---|---|---|---|---|
| | | Type | Mass ratio | Type | Mass ratio | First CNT | | Second CNT | | |
| Example A-1 | CNT dispersed liquid 1 | Pre-dispersed liquid 1 | 0.75 | Pre-dispersed liquid 6 | 1 | (1-1) | 1 | (2-1) | 5 | - |
| Example A-2 | CNT dispersed liquid 2 | Pre-dispersed liquid 1 | 0.75 | Pre-dispersed liquid 7 | 1 | (1-1) | 1 | (2-1) | 5 | - |
| Example A-3 | CNT dispersed liquid 3 | Pre-dispersed liquid 1 | 0.75 | Pre-dispersed liquid 8 | 1 | (1-1) | 1 | (2-1) | 5 | - |
| Example A-4 | CNT dispersed liquid 4 | Pre-dispersed liquid 1 | 0.75 | Pre-dispersed liquid 9 | 1 | (1-1) | 1 | (2-1) | 5 | - |
| Example A-5 | CNT dispersed liquid 5 | Pre-dispersed liquid 1 | 0.75 | Pre-dispersed liquid 10 | 1 | (1-1) | 1 | (2-2) | 5 | - |
| Example A-6 | CNT dispersed liquid 6 | Pre-dispersed liquid 1 | 0.75 | Pre-dispersed liquid 11 | 1 | (1-1) | 1 | (2-3) | 5 | - |
| Example A-7 | CNT dispersed liquid 7 | Pre-dispersed liquid 1 | 0.75 | Pre-dispersed liquid 12 | 1 | (1-1) | 1 | (2-4) | 5 | - |
| Example A-8 | CNT dispersed liquid 8 | Pre-dispersed liquid 1 | 0.75 | Pre-dispersed liquid 13 | 1 | (1-1) | 1 | (2-3) | 5 | - |
| Example A-9 | CNT dispersed liquid 9 | Pre-dispersed liquid 1 | 0.75 | Pre-dispersed liquid 14 | 1 | (1-1) | 1 | (2-3) | 5 | - |
| Example A-10 | CNT dispersed liquid 10 | Pre-dispersed liquid 1 | 0.75 | Pre-dispersed liquid 15 | 1 | (1-1) | 1 | (2-3) | 5 | - |
| Example A-11 | CNT dispersed liquid 11 | Pre-dispersed liquid 2 | 0.75 | Pre-dispersed liquid 13 | 1 | (1-1) | 1 | (2-3) | 5 | 0.8 |
| Example A-12 | CNT dispersed liquid 12 | Pre-dispersed liquid 3 | 0.75 | Pre-dispersed liquid 13 | 1 | (1-2) | 1 | (2-3) | 5 | 0.8 |
| Example A-13 | CNT dispersed liquid 13 | Pre-dispersed liquid 4 | 0.75 | Pre-dispersed liquid 13 | 1 | (1-3) | 1 | (2-3) | 5 | 0.8 |
| Example A-14 | CNT dispersed liquid 14 | Pre-dispersed liquid 2 | 1.25 | Pre-dispersed liquid 13 | 3 | (1-1) | 1 | (2-3) | 9 | 0.5 |
| Example A-15 | CNT dispersed liquid 15 | Pre-dispersed liquid 2 | 3.75 | Pre-dispersed liquid 13 | 1 | (1-1) | 1 | (2-3) | 1 | 2.5 |
| Example A-16 | CNT dispersed liquid 16 | Pre-dispersed liquid 2 | 6 | Pre-dispersed liquid 13 | 0.32 | (1-1) | 5 | (2-3) | 1 | 4.2 |
| Example A-17 | CNT dispersed liquid 17 | Pre-dispersed liquid 2 | 10 | Pre-dispersed liquid 13 | 0.24 | (1-1) | 10 | (2-3) | 1 | 4.6 |
| Example A-18 | CNT dispersed liquid 18 | - | - | - | - | (1-1) | 1 | (2-1) | 5 | 0.8 |
| Example A-19 | CNT dispersed liquid 19 | Pre-dispersed liquid 21b | 0.16 | Pre-dispersed liquid 21a | 0.8 | (1-1) | 1 | (2-1) | 5 | 0.8 |
| Comparative Example A-1 | CNT dispersed liquid 20 | Pre-dispersed liquid 1 | 1 | Pre-dispersed liquid 16 | 1 | (1-1) | 1 | (3-1) | 1 | - |
| Comparative Example A-2 | CNT dispersed liquid 21 | Pre-dispersed liquid 6 | 1 | Pre-dispersed liquid 10 | 1 | (2-1) | 1 | (2-2) | 1 | - |
| Comparative Example A-3 | CNT dispersed liquid 22 | Pre-dispersed liquid 5 | 0.75 | Pre-dispersed liquid 6 | 1 | (1-1) | 1 | (2-1) | 5 | - |

### <Physical property value and evaluation of carbon nanotube dispersed liquid>

The particle size distribution measurement of the carbon nanotube dispersed liquid, the carbon nanotube fiber diameter, pH, and the initial and time-dependent viscosity (after 3 days at 40°C), complex modulus, and phase angle were evaluated by the following methods. The results are shown in Tables 4 and 5.

### <Measurement of initial and time-dependent viscosity of carbon nanotube dispersed liquid>

The viscosity value was measured using a B-type viscometer ("BL" produced by Toki Sangyo Co., Ltd.) after leaving the carbon nanotube dispersed liquid in a thermostatic tank at 25°C for 1 hour or more, with the B-type viscometer rotor rotating at 60 rpm. The types of rotors used in the measurement were No. 1 in a case where the viscosity value was less than 100 mPa·s, No. 2 in a case where the viscosity value was 100 mPa·s or more and less than 500 mPa·s, No. 3 in a case where the viscosity value was 500 mPa·s or more and less than 2,000 mPa·s, and No. 4 in a case where the viscosity value was 2,000 mPa·s or more and less than 10,000 mPa·s. The lower the viscosity, the better the dispersibility, and the higher the viscosity, the worse the dispersibility. The carbon nanotube dispersed liquid obtained was determined to have poor dispersibility when the carbon nanotube dispersed liquid was clearly separated or precipitated. Determination criteria
⊚: Less than 3,000 mPa·s (excellent)
○: 3,000 mPa·s or more and less than 6,000 mPa·s (good)
△: 6,000 mPa·s or more and less than 10,000 mPa·s (acceptable)
×: 10,000 mPa·s or more, precipitation or separation (bad)

### <Measurement of initial and time-dependent complex modulus and phase angle of carbon nanotube dispersed body>

The complex modulus X and phase angle Y of the carbon nanotube dispersed body were evaluated by performing dynamic viscoelasticity measurement at 25°C, a frequency of 1 Hz, and a strain rate range of 0.01% to 5% using a rheometer (RheoStress1 rotational rheometer produced by Thermo Fisher Scientific Co., Ltd.) with a cone diameter of 60 mm and 2°. The smaller the obtained complex modulus, the better the dispersibility, and the larger the complex modulus, the worse the dispersibility. Moreover, the larger the obtained phase angle, the better the dispersibility, and the smaller the phase angle, the worse the dispersibility.

### Determination criteria for complex modulus

○: 5 Pa or more and less than 400 Pa (good)
△: 400 Pa or more and 800 Pa or less (acceptable)
×: Less than 5 Pa or more than 800 Pa (unacceptable)

### Determination criteria for phase angle

○: 7° or more and less than 50° (good)
△: 3° or more and less than 7° (acceptable)
×: Less than 3° or more than 50° (not acceptable)

### [Table 4]

**Table 4.**

| | | Particle size distribution | | | CNT fiber diameter | | pH of dispersed liquid |
|---|---|---|---|---|---|---|---|
| | | Particle size distribution peak 1 [µm] | Particle size distribution peak 2 [µm] | Cumulative particle size D₅₀ [µm] | Fiber diameter distribution (I) [µm] | Fiber diameter distribution (II) [µm] | |
| Example A-1 | CNT dispersed liquid 1 | 0.7 | 19.9 | 11.1 | 1 to 2 | 4 to 10 | 8.9 |
| Example A-2 | CNT dispersed liquid 2 | 0.9 | 26.4 | 11.8 | 1 to 2 | 4 to 10 | 8.9 |
| Example A-3 | CNT dispersed liquid 3 | 1.3 | 14.3 | 8.5 | 1 to 2 | 4 to 10 | 8.9 |
| Example A-4 | CNT dispersed liquid 4 | 1.2 | 13.3 | 9.2 | 1 to 2 | 4 to 10 | 9.3 |
| Example A-5 | CNT dispersed liquid 5 | 0.5 | 18.4 | 12.3 | 1 to 2 | 9 to 16 | 8.9 |
| Example A-6 | CNT dispersed liquid 6 | 0.8 | 21.5 | 14.8 | 1 to 2 | 4 to 9 | 8.9 |
| Example A-7 | CNT dispersed liquid 7 | 0.5 | 22.7 | 12.5 | 1 to 2 | 9 to 16 | 9.2 |
| Example A-8 | CNT dispersed liquid 8 | 0.9 | 20.8 | 12.7 | 1 to 2 | 4 to 9 | 10.2 |
| Example A-9 | CNT dispersed liquid 9 | 0.8 | 21.5 | 15.4 | 1 to 2 | 4 to 9 | 10.6 |
| Example A-10 | CNT dispersed liquid 10 | 1.1 | 23.7 | 22.5 | 1 to 2 | 4 to 9 | 11 |
| Example A-11 | CNT dispersed liquid 11 | 0.8 | 21.2 | 13.4 | 1 to 2 | 4 to 9 | 9.6 |
| Example A-12 | CNT dispersed liquid 12 | 0.7 | 18.3 | 10.8 | 1 to 2 | 4 to 9 | 9.8 |
| Example A-13 | CNT dispersed liquid 13 | 0.8 | 19.4 | 12.5 | 1 to 2 | 4 to 9 | 10.2 |
| Example A-14 | CNT dispersed liquid 14 | 0.7 | 19.8 | 5.8 | 1 to 2 | 4 to 9 | 9.8 |
| Example A-15 | CNT dispersed liquid 15 | 0.8 | 34.4 | 28.8 | 1 to 2 | 4 to 10 | 10.6 |
| Example A-16 | CNT dispersed liquid 16 | 1.0 | 29.9 | 24.6 | 1 to 2 | 4 to 9 | 9.6 |
| Example A-17 | CNT dispersed liquid 17 | 1.5 | 31.5 | 32.5 | 1 to 2 | 4 to 9 | 9.8 |
| Example A-18 | CNT dispersed liquid 18 | 0.9 | 17.3 | 10.4 | 1 to 2 | 4 to 9 | 9.3 |
| Example A-19 | CNT dispersed liquid 19 | 0.8 | 24.6 | 13.3 | 1 to 2 | 4 to 9 | 8.9 |
| Comparative Example A-1 | CNT dispersed liquid 20 | 20.1 | - | 20.1 | 1 to 2 | 140 to 160 | 7.7 |
| Comparative Example A-2 | CNT dispersed liquid 21 | 0.6 | - | 0.5 | 4 to 9 | 9 to 16 | 8.9 |
| Comparative Example A-3 | CNT dispersed liquid 22 | 0.7 | 5.2 | 4.3 | 1 to 2 | 4 to 9 | 9.1 |

### [Table 5]

**Table 5.**

| | | Initial | | | Over time | | |
|---|---|---|---|---|---|---|---|
| | | Complex modulus | Phase angle | Viscosity | Complex modulus | Phase angle | Viscosity |
| Example A-1 | CNT dispersed liquid 1 | ○ | ○ | ○ | ○ | ○ | ○ |
| Example A-2 | CNT dispersed liquid 2 | ○ | ○ | ○ | ○ | ○ | ○ |
| Example A-3 | CNT dispersed liquid 3 | ○ | ○ | ○ | Δ | ○ | Δ |
| Example A-4 | CNT dispersed liquid 4 | ○ | ○ | ○ | Δ | ○ | Δ |
| Example A-5 | CNT dispersed liquid 5 | ○ | ○ | ○ | ○ | ○ | ○ |
| Example A-6 | CNT dispersed liquid 6 | ○ | ○ | ○ | ○ | ○ | ○ |
| Example A-7 | CNT dispersed liquid 7 | ○ | ○ | ○ | ○ | ○ | ○ |
| Example A-8 | CNT dispersed liquid 8 | ○ | ○ | ⊚ | ○ | ○ | ○ |
| Example A-9 | CNT dispersed liquid 9 | ○ | ○ | ⊚ | ○ | ○ | ⊚ |
| Example A-10 | CNT dispersed liquid 10 | ○ | ○ | ⊚ | ○ | ○ | ⊚ |
| Example A-11 | CNT dispersed liquid 11 | ○ | ○ | ○ | ○ | ○ | ○ |
| Example A-12 | CNT dispersed liquid 12 | ○ | ○ | ○ | Δ | ○ | ○ |
| Example A-13 | CNT dispersed liquid 13 | ○ | ○ | ○ | ○ | ○ | ○ |
| Example A-14 | CNT dispersed liquid 14 | ○ | ○ | ○ | △ | ○ | ○ |
| Example A-15 | CNT dispersed liquid 15 | ○ | ○ | ⊚ | ○ | ○ | ○ |
| Example A-16 | CNT dispersed liquid 16 | ○ | ○ | ⊚ | ○ | ○ | ⊚ |
| Example A-17 | CNT dispersed liquid 17 | ○ | ○ | ○ | Δ | Δ | Δ |
| Example A-18 | CNT dispersed liquid 18 | ○ | ○ | ○ | ○ | ○ | ○ |
| Example A-19 | CNT dispersed liquid 19 | ○ | ○ | ○ | ○ | ○ | ○ |
| Comparative Example A-1 | CNT dispersed liquid 20 | Δ | Δ | Δ | × | × | × |
| Comparative Example A-2 | CNT dispersed liquid 21 | Δ | Δ | Δ | × | × | × |
| Comparative Example A-3 | CNT dispersed liquid 22 | Δ | Δ | Δ | × | × | × |

As shown in Table 5, it has been confirmed that all of the carbon nanotube dispersed liquids 1 to 19 of the examples had excellent initial viscosity, and also excellent dispersibility and stability over time. On the other hand, the carbon nanotube dispersed liquids 20 to 22 of the comparative examples had high viscosity and further thickened over time.

### (Example B-1)

The carbon nanotube dispersed liquid (CNT dispersed liquid 1) and NMP in which 8% by mass PVDF (polyvinylidene fluoride, Solef #5130 (produced by Solvey Corporation)) was dissolved as a binder were added into a plastic container having a capacity of 150 mL, and then the mixture was stirred at 2,000 rpm for 30 seconds using a rotation and revolution mixer (Awatori Rentaro, ARE-310, produced by Thinky Corporation) to obtain a carbon nanotube dispersion composition. Thereafter, NMC (NCM523 (produced by Nippon Chemical Industrial Co., Ltd., composition: LiNi_{0.5}Co_{0.2}Mn_{0.3}O₂)) was added as an electrode active material, and the mixture was stirred at 2,000 rpm for 20 minutes using a rotation and revolution mixer. Thereafter, NMP was further added, and the mixture was stirred at 2,000 rpm for 30 seconds using a rotation and revolution mixer to obtain an electrode mixture slurry. The solid content of the electrode mixture slurry was 70% by mass. In the non-volatile content of the electrode mixture slurry, the non-volatile content ratio of electrode active material:CNT:binder was 98:0.5:1.5.

The electrode mixture slurry was applied using an applicator onto an aluminum foil having a thickness of 20 µm, which served as a current collector, and then dried in an electric oven at 120°C±5°C for 25 minutes to adjust the weight per unit area of the electrode to 20 mg/cm². Further, rolling treatment was performed using a roll press (3t hydraulic roll press, produced by Thank-Metal Co., Ltd.) to prepare a positive electrode 1 having an electrode film 1 with a density of 3.0 g/cm³.

### <Preparation of standard negative electrode mixture slurry>

Denka Black Li-400 (produced by Denka Co., Ltd.), CMC #1190 (produced by Daicel FineChem Corporation), and water were added into a plastic container having a capacity of 150 mL, and then the mixture was stirred at 2,000 rpm for 30 seconds using a rotation and revolution mixer (Awatori Rentaro, ARE-310, produced by Thinky Corporation). Further, artificial graphite CGB-20 (produced by Nippon Graphite Industries Co., Ltd.) was added as a negative electrode active material, and the mixture was stirred at 2,000 rpm for 150 seconds using a rotation and revolution mixer. Subsequently, SBR (styrene butadiene rubber, TRD2001 (produced by JSR Corporation, solid content 48%)) was then added, and the mixture was stirred at 2,000 rpm for 30 seconds using a rotation and revolution mixer to obtain a standard negative electrode mixture slurry. The solid content of the standard negative electrode mixture slurry was 48% by mass. The solid content ratio of negative electrode active material:conductive material:CMC:SBR in the standard negative electrode mixture slurry was 97:0.5:1:1.5.

### <Preparation of standard negative electrode>

The negative electrode mixture slurry was applied using an applicator onto a copper foil having a thickness of 20 µm, which served as a current collector, and then dried in an electric oven at 80°C±5°C for 25 minutes to adjust the weight per unit area of the electrode to 10 mg/cm². Further, rolling treatment was performed using a roll press (3t hydraulic roll press, produced by Thank-Metal Co., Ltd.) to prepare a negative electrode with a density of the negative electrode mixture layer of 1.5 g/cm³.

### <Preparation of battery 1>

The above standard negative electrode and the obtained positive electrode 1 were punched out to 50 mm × 45 mm and 45 mm × 40 mm, respectively, and a separator (porous polypropylene film) was inserted therebetween, which were inserted into an aluminum laminate bag and dried in an electric oven at 70°C for 1 hour. Subsequently, in a glove box filled with argon gas, 2 mL of an electrolytic solution was poured, and the aluminum laminate bag was sealed to prepare a secondary battery 1. The electrolytic solution is a non-aqueous electrolytic solution prepared by mixing ethylene carbonate, dimethyl carbonate, and diethyl carbonate in a ratio of 1:1:1 (volume ratio) to prepare a mixed solvent, adding 1 part of VC (vinylene carbonate) as an additive to 100 parts of the electrolytic solution, and then dissolving LiPF₆ at a concentration of 1M.

### (Examples B-2 to B-19, Comparative Examples B-1 to B-3)

Except for changing the CNT dispersed liquid shown in Table 6, the same procedures as in Example B-1 were followed to prepare the electrode film mixture slurry, the electrode film, the positive electrode, and the secondary battery.

### <Evaluation of secondary battery>

The rate characteristics and cycle characteristics of the secondary battery were evaluated by the following method. The results are shown in Table 6.

### <Evaluation of rate characteristics of lithium ion secondary battery>

The laminated lithium ion secondary battery was placed in a thermostatic chamber at 25°C, and charge/discharge measurement was performed using a charge/discharge device (SM-8, produced by Hokuto Denko Corporation). The secondary battery was charged at constant current and constant voltage (cutoff current: 1.0 mA (0.02 C)) with a charge current of 10 mA (0.2 C) and a charge termination voltage of 4.2 V, and then discharged at a constant current with a discharge current of 10 mA (0.2 C) and a discharge termination voltage of 2.5 V. This operation was repeated three times, and then the secondary battery was charged at constant current and constant voltage (cutoff current (1.0 mA 0.02 C)) with a charge current of 10 mA (0.2 C) and a charge termination voltage of 4.2 V, and discharged at a constant current with discharge currents of 0.2 C and 3 C until the discharge termination voltage of 2.5 V was reached, thereby determining the respective discharge capacity. The rate characteristics can be expressed by the following formula based on the ratio of the 0.2 C discharge capacity to the 3 C discharge capacity. (Formula) Rate characteristics = 3 C discharge capacity / third 0.2 C discharge capacity × 100 (%) [Evaluation criteria]
⊚: Rate characteristics are 80% or more (excellent)
○: Rate characteristics are 70% or more and less than 80% (good)
△: Rate characteristics are 60% or more and less than 70% (acceptable)
×: Rate characteristics are less than 60% (unacceptable)

### <Evaluation of cycle characteristics of lithium ion secondary battery>

The laminated lithium ion secondary battery was placed in a thermostatic chamber at 25°C, and charge/discharge measurement was performed using a charge/discharge device (SM-8, produced by Hokuto Denko Corporation). The secondary battery was charged at constant current and constant voltage with a charge current of 50 mA (1 C) and a charge termination voltage of 4.2 V (cutoff current: 1.25 mA (0.025 C)), and then discharged at a constant current with a discharge current of 50 mA (1 C) and a discharge termination voltage of 2.5 V. This operation was repeated 200 times. 1 C was the current value at which the theoretical capacity of the positive electrode was discharged for 1 hour. The cycle characteristics can be expressed by the following formula based on the ratio of the third 1 C discharge capacity at 25°C to the 200^{th} 1 C discharge capacity. (Formula) Cycle characteristics = third 1 C discharge capacity / 200th 1 C discharge capacity × 100 (%) [Evaluation criteria]
⊚: Cycle characteristics are 80% or more (excellent)
○: Cycle characteristics are 70% or more and less than 80% (good)
△: Cycle characteristics are 60% or more and less than 70% (acceptable)
×: Cycle characteristics are less than 60% (unacceptable)

### [Table 6]

**Table 6.**

| | | Electrode film for positive electrode | CNT dispersed liquid | Evaluation | |
|---|---|---|---|---|---|
| | | | | Rate characteristics | Cycle characteristics |
| Example B-1 | Secondary battery 1 | Electrode film 1 | CNT dispersed liquid 1 | ○ | ○ |
| Example B-2 | Secondary battery 2 | Electrode film 2 | CNT dispersed liquid 2 | ○ | ○ |
| Example B-3 | Secondary battery 3 | Electrode film 3 | CNT dispersed liquid 3 | ○ | △ |
| Example B-4 | Secondary battery 4 | Electrode film 4 | CNT dispersed liquid 4 | ○ | △ |
| Example B-5 | Secondary battery 5 | Electrode film 5 | CNT dispersed liquid 5 | ○ | ○ |
| Example B-6 | Secondary battery 6 | Electrode film 6 | CNT dispersed liquid 6 | ○ | ○ |
| Example B-7 | Secondary battery 7 | Electrode film 7 | CNT dispersed liquid 7 | ○ | ○ |
| Example B-8 | Secondary battery 8 | Electrode film 8 | CNT dispersed liquid 8 | ⊚ | ⊚ |
| Example B-9 | Secondary battery 9 | Electrode film 9 | CNT dispersed liquid 9 | ⊚ | ⊚ |
| Example B-10 | Secondary battery 10 | Electrode film 10 | CNT dispersed liquid 10 | ⊚ | ⊚ |
| Example B-11 | Secondary battery 11 | Electrode film 11 | CNT dispersed liquid 11 | ⊚ | ⊚ |
| Example B-12 | Secondary battery 12 | Electrode film 12 | CNT dispersed liquid 12 | ⊚ | ⊚ |
| Example B-13 | Secondary battery 13 | Electrode film 13 | CNT dispersed liquid 13 | ⊚ | ⊚ |
| Example B-14 | Secondary battery 14 | Electrode film 14 | CNT dispersed liquid 14 | ○ | △ |
| Example B-15 | Secondary battery 15 | Electrode film 15 | CNT dispersed liquid 15 | ⊚ | ⊚ |
| Example B-16 | Secondary battery 16 | Electrode film 16 | CNT dispersed liquid 16 | ○ | ○ |
| Example B-17 | Secondary battery 17 | Electrode film 17 | CNT dispersed liquid 17 | ○ | △ |
| Example B-18 | Secondary battery 18 | Electrode film 18 | CNT dispersed liquid 18 | ○ | ○ |
| Example B-19 | Secondary battery 19 | Electrode film 19 | CNT dispersed liquid 19 | ○ | ○ |
| Comparative Example B-1 | Secondary battery 20 | Electrode film 20 | CNT dispersed liquid 20 | × | × |
| Comparative Example B-2 | Secondary battery 21 | Electrode film 21 | CNT dispersed liquid 21 | × | × |
| Comparative Example B-3 | Secondary battery 22 | Electrode film 22 | CNT dispersed liquid 22 | × | × |

As shown in Table 6, the battery having a positive electrode film made of a carbon nanotube dispersed liquid with excellent dispersibility and good viscosity and stability had good rate characteristics and cycle characteristics, while the battery having a positive electrode film made of a carbon nanotube dispersed liquid with poor viscosity had poor rate characteristics and cycle characteristics. It is assumed that good viscosity leads to uniform formation of conductive paths in the positive electrode film, which improves the rate characteristics. In addition, it is assumed that the load of the cycles is concentrated on the electrode active material particles that have relatively low resistance, which promotes deterioration, whereas if a good conductive network is formed throughout, the load is distributed, so deterioration is less likely to occur.

As described above, it has been confirmed that the carbon nanotube dispersed liquid having specific particle size distribution characteristics has excellent stability over time without impairing the electrical conductivity even in a case where multiple carbon nanotubes are contained. In particular, in a case of using a carbon nanotube dispersed liquid including two specific types of carbon nanotubes in a specific mass ratio, the characteristics of the two types of carbon nanotubes can be maximized, and a good dispersion state can be maintained in the electrode film to form an efficient conductive network, making it possible to produce a battery with particularly good rate characteristics and cycle characteristics.

Although the present invention has been described with reference to the embodiments above, the present invention is not limited to the above. The configuration and details of the present invention can be modified in various ways that are understandable to those skilled in the art within the scope of the present invention.

Although the present invention has been described with reference to several embodiments above, the present invention is not limited to the several embodiments above. The configuration and details of the present invention can be modified in various ways within the scope of the present invention.

The disclosure of the present application is related to the subject matters described in Japanese Patent Application Laid-Open No. 2022-099875, filed on June 21, 2022, the entire disclosure of which is incorporated herein by reference.

### Reference Signs List

1: Particle size distribution peak 1
2: Particle size distribution peak 2

## Claims

1. A carbon nanotube dispersed liquid, comprising carbon nanotubes, a dispersant, and a solvent,
wherein in a volume-based particle size distribution curve measured by a laser diffraction/scattering-type particle size distribution measuring method,
particle size distribution peaks are present in a range where a particle size is 0.1 µm or more and 3 µm or less and in a range where the particle size is 10 µm or more and 100 µm or less, and
a cumulative particle size D₅₀ is 4 µm or more.

2. The carbon nanotube dispersed liquid according to claim 1, having at least two fiber diameter distributions in a range where a fiber diameter is 0.1 nm or more and 20 nm or less in a fiber diameter distribution of the carbon nanotubes measured by a transmission electron microscope.

3. The carbon nanotube dispersed liquid according to claim 2, having a first fiber diameter distribution in a range of 0.5 nm or more and less than 3 nm, and a second fiber diameter distribution in a range of 3 nm or more and 10 nm or less.

4. The carbon nanotube dispersed liquid according to claim 1, wherein the dispersant comprises fluorine-based resin.

5. The carbon nanotube dispersed liquid according to claim 4, wherein a mass ratio of the fluorine-based resin to the carbon nanotubes is 0.1 to 10.

6. The carbon nanotube dispersed liquid according to claim 1, wherein the solvent is substantially free of water and has a pH of 8 or more and 12 or less.

7. An electrode mixture slurry, comprising the carbon nanotube dispersed liquid according to any one of claims 1 to 6, and an electrode active material.

8. An electrode film, comprising a coating film of the carbon nanotube dispersed liquid according to any one of claims 1 to 6 or the electrode mixture slurry according to claim 7.

9. A secondary battery, comprising a positive electrode, a negative electrode, and an electrolyte, the secondary battery using the electrode film according to claim 8 in at least one of the positive electrode and the negative electrode.
